(19) Europäisches Patentamt
European Patent Office
Office européen des brevets

(11) EP 3 284 131 B1

(12) **EUROPÄISCHE PATENTSCHRIFT**

(45) Veröffentlichungstag und Bekanntmachung des Hinweises auf die Patenterteilung:
**15.07.2020 Patentblatt 2020/29**

(21) Anmeldenummer: **16722783.4**

(22) Anmeldetag: **13.04.2016**

(51) Int Cl.:
***H01M 8/04089*** *(2016.01)* ***H01M 8/04791*** *(2016.01)*

(86) Internationale Anmeldenummer:
**PCT/EP2016/000606**

(87) Internationale Veröffentlichungsnummer:
**WO 2016/165824 (20.10.2016 Gazette 2016/42)**

# (54) VERFAHREN UND VORRICHTUNG ZUM BETREIBEN VON BRENNSTOFFZELLEN MIT KÜNSTLICHER LUFT

PROCESS AND DEVICE FOR OPERATING A FULE CELL SYSTEM WITH SYNTHETIC AIR

PROCÉDÉ ET DISPOSITIF POUR OPÈRER UN SYSTÈME DE PILE À COMBUSTIBLE AVEC DE L'AIR ARTIFICIELLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.04.2015 DE 102015004827**

(43) Veröffentlichungstag der Anmeldung:
**21.02.2018 Patentblatt 2018/08**

(73) Patentinhaber: **Proton Motor Fuel Cell GmbH**
**82178 Puchheim (DE)**

(72) Erfinder: **MEDER, Quirin**
**86938 Schondorf am Ammersee (DE)**

(74) Vertreter: **Schmitt-Nilson Schraud Waibel Wohlfrom**
**Patentanwälte Partnerschaft mbB**
**Pelkovenstraße 143**
**80992 München (DE)**

(56) Entgegenhaltungen:
**DE-A1-102014 112 745**
**JP-A- 2004 158 229**
**JP-A- 2007 273 276**
**US-A1- 2007 065 711**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 284 131 B1

## Beschreibung

Gegenstand der vorliegenden Erfindung ist ein Verfahren zum Betreiben eines Brennstoffzellen-Systems mit Betriebsgasen, die inerte Gasbestandteile enthalten, ein Brennstoffzellen-System, das mit inerte Gasbestandteile enthaltenden Betriebsgasen betreibbar ist, und ein Verbrauchersystem, das ein derartiges Brennstoffzellen-System aufweist. Bei dem Verfahren, dem Brennstoffzellen-System und dem Verbrauchersystem werden während des Brennstoffzellenbetriebs weder Brennstoffzellenabgase an die Umgebung abgegeben noch gespeichert. Bei einer alternativen Ausführungsform wird während des Brennstoffzellenbetriebs zumindest weder Anodenabgas an die Umgebung abgegeben noch gespeichert.

In Brennstoffzellen wird elektrische Energie aus chemischer Energie erzeugt, in Umkehrung der Wasserelektrolyse. Die Einzelzelle liefert kontinuierlich Strom dadurch, dass die zu oxidierende Substanz (Wasserstoff) und das Oxidationsmittel (Sauerstoff) kontinuierlich zugeführt und die Oxidationsprodukte kontinuierlich abgeführt werden. Unterschiedliche Typen von Brennstoffzellen, sowie deren Aufbau und Arbeitsweise sind an sich bekannt.

Brennstoffzellen eignen sich zur Erzeugung von Strom für beliebige Verbraucher. Sie liefern die erforderliche Leistung auf umweltfreundliche Weise, zuverlässig und mit einem guten Wirkungsgrad.

Eines der Reaktionsgase, Sauerstoff, wird meist in Form von Luft zugeführt, die im einfachsten Fall der Umgebung entnommen wird. Nach erfolgter Reaktion wird gegebenenfalls verbleibender Restsauerstoff bzw. die an Sauerstoff verarmte Luft inklusive Produktwasser wieder in die Umgebung entlassen. Das andere Reaktionsgas, Wasserstoff, muss aus einem Vorratsbehälter, wie beispielsweise einer Druckgasflasche, entnommen werden. Nach erfolgter Reaktion kann unverbrauchter Wasserstoff nicht einfach an die Umgebung abgegeben werden. Daher darf einer Brennstoffzelle entweder nur so viel Wasserstoff zugeführt werden, wie an der Anode verbraucht wird, d. h. die Brennstoffzelle wird anodenseitig im Dead-End-Modus betrieben, oder das Anodenabgas wird rückzirkuliert und/oder der unverbrauchte Wasserstoff im Anodenabgas wird anderweitig verwertet, beispielsweise zum Betreiben eines Brenners.

Manche Einsatzgebiete von Brennstoffzellen erfordern, dass während des Betriebs der Brennstoffzellen kein direkter Kontakt zur Umgebung besteht, beispielsweise der Einsatz in einem abgeschlossenen System wie einem Unterwasserfahrzeug. Bei einem derartigen Einsatz gilt für das Reaktionsgas Sauerstoff das gleiche wie ansonsten für Wasserstoff: Sauerstoff muss aus einem Vorratsbehälter wie beispielsweise einem Druckgasbehälter zugeführt werden, und nach der Reaktion kann etwaiger unverbrauchter Sauerstoff nicht an die Umgebung abgegeben werden. Auch bei der Reaktion entstehendes Produktwasser muss innerhalb des abgeschlossenen Systems verbleiben.

Probleme ergeben sich, wenn Brennstoffzellen innerhalb eines abgeschlossenen Systems nicht mit reinem Wasserstoff und reinem Sauerstoff betrieben werden sollen, sondern wenn mindestens eines der zugeführten Speisegase auch inerte Anteile, dass heißt innerhalb der Brennstoffzellen nicht abreagierende Anteile, enthält. Dies ist typischerweise kathodenseitig der Fall. Bei Verwendung von Sauerstoff in reiner Form oder in einer hohen Konzentration würde der Kathodenkatalysator rasch oxidieren, was zu einer Degradation und schließlich zur Zerstörung des Katalysators und damit zum Erliegen der Brennstoffzellenreaktion führen würde. Es ist empfehlenswert, Sauerstoff in einer Konzentration von nicht mehr als 50 Volumenprozent zu verwenden.

Deshalb wird in Brennstoffzellen Sauerstoff meist in Form von Luft als Betriebsgas eingesetzt. Natürliche Luft enthält knapp 21 Volumenprozent Sauerstoff, etwa 78 Volumenprozent Stickstoff, Rest vorwiegend Argon, außerdem Kohlendioxid und diverse weitere Edelgase in Kleinstmengen.

Der Nachteil der Verwendung von Luft oder allgemein von Gasen, die inerte Bestandteile enthalten, ist, dass diese inerten Bestandteile die Brennstoffzellen unverändert verlassen, sodass sich in einem abgeschlossenen System im Laufe des Brennstoffzellenbetriebs große Mengen an Abgasen ansammeln, die irgendwo aufgefangen werden müssen, gegebenenfalls in komprimierter oder verflüssigter Form. Das Vorsehen von Abgas-Auffangbehältern ausreichender Größe ist jedoch nicht praktikabel, und das Komprimieren oder gar Verflüssigen der Abgase würde einen nicht unerheblichen Teil der erzeugten Brennstoffzellenenergie verschwenden.

Würde eine Brennstoffzelle in einem abgeschlossenem System beispielsweise mit natürlicher Luft aus einer Druckgasflasche betrieben werden, würden mindestens 79 Volumenprozent des zugeführten Gases (mindestens die inerten Anteile) nicht abreagieren. Das Abgas könnte auch nicht rezirkuliert werden, selbst wenn es noch einen beträchtlichen Anteil an nicht abreagiertem Sauerstoff enthielte, da auf diese Weise mit zunehmender Betriebsdauer den Brennstoffzellen zunehmend mehr inerte Gase zugeführt würden. Die Brennstoffzellenleistung würde abfallen, und mit zunehmender Anreicherung der inerten Gase im Gaskreislauf würde die Brennstoffzellenreaktion irgendwann zum Erliegen kommen.

Bisher war es nicht möglich, Brennstoffzellen mit inerte Anteile enthaltenen Betriebsgasen, wie beispielsweise Luft, in geschlossenen Systemen zu betreiben, da für die Unterbringung der inerten Brennstoffzellenabgase unter den Temperatur- und Druckbedingungen des Systems zu viel Speicherraum benötigt wurde und/oder für das Komprimieren oder Verflüssigen der inerten Abgase zu viel Energie benötigt wurde (ohne das Raumproblem dabei völlig zu beseitigen).

Aufgabe der vorliegenden Erfindung ist es daher, das Betreiben von Brennstoffzellen mit Betriebsgasen, die inerte Anteile enthalten, wie beispielsweise Luft, in abgeschlossenen Verbrauchersystemen, insbesondere in räumlich

beengten abgeschlossenen Verbrauchersystemen wie beispielsweise Unterwasserfahrzeugen, zu ermöglichen.

Aufgabe der vorliegenden Erfindung ist es insbesondere, ein Verfahren und eine Vorrichtung zum Betreiben von Brennstoffzellen in einem abgeschlossenen Verbrauchersystem, insbesondere einem räumlich beengten abgeschlossenem Verbrauchersystem wie beispielsweise einem Unterwasserfahrzeug, bereitzustellen, wobei den Brennstoffzellen ein Betriebsgas, das inerte Anteile enthält, wie beispielsweise Luft, zugeführt wird.

Aufgabe der vorliegenden Erfindung ist es auch, ein Brennstoffzellen-betriebenes Verbrauchersystem wie ein Fahrzeug bereitzustellen, das ein inerte Gasbestandteile enthaltendes Betriebsgas wie Luft zum Betreiben der Brennstoffzellen verwendet, ohne während des Brennstoffzellenbetriebs Brennstoffzellenabgas an die Umgebung abzugeben und ohne über eine Einrichtung zum Speichern des Brennstoffzellenabgases zu verfügen.

Aufgabe der vorliegenden Erfindung ist es ferner, ein Verfahren, eine Vorrichtung und ein Verbrauchersystem bereitzustellen, bei dem Umgebungsluft als Kathodenbetriebsgas verwendet wird und nach der Brennstoffzellenreaktion als Kathodenabgas an die Umgebung abgegeben wird, während für die Dauer des Brennstoffzellenbetriebs kein Anodenabgas an die Umgebung abgegeben wird, aber auch nicht gespeichert wird.

Die Aufgaben werden gelöst durch das Brennstoffzellensystem, das Verbrauchersystem und das Verfahren zum Betreiben eines Brennstoffzellensystems, jeweils mit den Merkmalen wie sie in den unabhängigen Ansprüchen angegeben sind. Ausführungsformen der Erfindung sind in den jeweiligen abhängigen Ansprüchen angegeben.

Das erfindungsgemäße Brennstoffzellensystem und das erfindungsgemäße Verbrauchersystem sind "abgeschlossene Kompaktsysteme". Sie sind abgeschlossene Systeme insofern als sie während ihres Betriebs weder Material aus der Umgebung aufnehmen noch Material an die Umgebung abgeben, und sie sind Kompaktsysteme insofern, als sie kein Abgas (im Sinne von "Gas, das abgegeben werden muss") erzeugen und daher nicht über Speicherbehälter zur Speicherung von Abgas, in gasförmiger oder verflüssigter Form, verfügen. Auf diese Weise kann in räumlich beengten Verbrauchersystemen eine erhebliche Platzersparnis erzielt werden. Dies wird erfindungsgemäß dadurch erreicht, dass die Brennstoffzellen-Betriebsgase, die jeweils außer den Reaktionsgasen Wasserstoff beziehungsweise Sauerstoff auch inerte Gaskomponenten enthalten, erst während des Betriebs des Brennstoffzellensystems aus den jeweiligen Komponenten gemischt werden, und die Brennstoffzellenabgase, die inerte und gegebenenfalls auch unverbrauchte Reaktionsgase enthalten, rückzirkuliert werden. Durch kontinuierlich Ergänzen der verbrauchten Reaktionsgase entstehen kontinuierlich erneut Betriebsgase, die den Brennstoffzellen zugeführt werden können. Das erfindungsgemäße Brennstoffzellensystem kommt daher mit einer sehr geringen Menge Inertgas aus, da die zu Beginn des Brennstoffzellenbetriebs eingeführte Inertgasmenge kontinuierlich im Kreis geführt wird. Es entsteht keinerlei unverwertbares Abgas, das gespeichert oder entlassen werden müsste. Als Reaktionsprodukt entsteht lediglich Wasser, das ohne spezielle Behandlung zu seiner Verflüssigung in flüssiger Form gespeichert werden kann und daher nur wenig Platz benötigt.

Bei einer Variante des erfindungsgemäßen Brennstoffzellensystems wird nur das Anodenabgas rückzirkuliert, während das Kathodenabgas in die Umgebung entlassen wird.

Nachfolgend werden die zur Beschreibung der vorliegenden Erfindung verwendeten Begriffe erläutert:
Das Anoden- bzw. Kathoden-Betriebsgas ist das der Anode bzw. der Kathode einer Brennstoffzelle zugeführte Gas. Das Betriebsgas enthält das Reaktionsgas und inerte Gasbestandteile (Inertgas) und gegebenenfalls gasförmiges Wasser.

Das Anoden- bzw. Kathoden-Reaktionsgas ist der an der Brennstoffzellenreaktion teilnehmende Bestandteil des Betriebsgases. Bei der vorliegenden Erfindung ist das Anodenreaktionsgas Wasserstoff und das Kathodenreaktionsgas Sauerstoff.

Der inerte Gasbestandteil (Inertgas) ist, neben ggf. enthaltenem gasförmigem Wasser, der Bestandteil des Anoden- bzw. Kathodenbetriebsgases, der nicht an der Brennstoffzellenreaktion teilnimmt, d.h. innerhalb der Brennstoffzelle nicht abreagiert, und die Brennstoffzelle im Brennstoffzellenabgas verlässt.

Das Anoden- bzw. Kathoden-Abgas ist das Material, das die Brennstoffzellen nach erfolgter Reaktion der Betriebsgase verlässt. Das Brennstoffzellenabgas kann auch flüssige Bestandteile enthalten, beispielsweise Reaktionswasser.

Eine Brennstoffzellenanordnung umfasst eine oder mehrere Brennstoffzellen, die einen oder mehrere Brennstoffzellenstapel bilden können.

Ein Brennstoffzellensystem ist eine Brennstoffzellenanordnung inklusive der zum Betreiben der Brennstoffzellen erforderlichen Komponenten wie beispielsweise Gas-Vorratsbehältern, Leitungen, Pumpen, Ventilen, etc.

Ein Verbrauchersystem ist ein stationäres oder mobiles Gerät wie beispielsweise ein Fahrzeug, das ein Brennstoffzellensystem aufweist und das mittels elektrischer Energie betrieben wird, die mindestens teilweise von dem Brennstoffzellensystem erzeugt wird.

Ein abgeschlossenes System (Brennstoffzellensystem oder Verbrauchersystem) ist ein mobiles oder stationäres System, bei dem keine Möglichkeit besteht, während der von dem System auszuführenden Mission, Materialien wie beispielsweise Betriebsgase aus der Umgebung aufzunehmen oder Materialien wie beispielsweise Abgase an die Umgebung abzugeben.

Ein Kompaktsystem (Brennstoffzellen-oder Verbraucherkompaktsystem) ist ein mobiles oder stationäres System ohne Speichermöglichkeit für Brennstoffzellenabgas in gasförmiger oder flüssiger Form abgesehen von in flüssiger Form gespeichertem Wasser.

Bei einem abgeschlossenem Kompaktsystem besteht weder die Möglichkeit, während des Betriebs der Brennstoffzellen Material aus der Umgebung (beispielsweise der Atmosphäre) aufzunehmen oder an sie abzugeben, noch die Möglichkeit, Brennstoffzellenabgas (abgesehen von Wasser in flüssiger Form) zu speichern. Die Platzverhältnisse innerhalb bestimmter Verbrauchersysteme können es erfordern, dass einzelne Komponenten des Brennstoffzellensystems, beispielsweise Gasbehälter, nicht in unmittelbarer Nähe der Brennstoffzellenanordnung angebracht werden können. Ein derartiges System wird als abgeschlossenes Brennstoffzellen-Kompaktsystem beziehungsweise als abgeschlossenes VerbraucherKompaktsystem betrachtet, sofern die betreffenden Komponenten in oder an dem Verbrauchersystem untergebracht sind.

Ein anodenseitig abgeschlossenes Kompaktsystem ist ein Brennstoffzellensystem oder ein Verbrauchersystem, bei dem keine Möglichkeit besteht, während des Betriebs der Brennstoffzellen Anodenbetriebsgas aus der Umgebung aufzunehmen oder Anodenabgas an die Umgebung abzugeben oder (abgesehen von Wasser in flüssiger Form) zu speichern. Ein derartiges "halbgeschlossenes" Kompaktsystem vereint den Vorteil der Handlichkeit mit dem Vorteil, problemlos in geschlossenen Räumen betrieben werden zu können.

Kern des erfindungsgemäßen Brennstoffzellensystems ist eine Brennstoffzellenanordnung, die mindestens eine Brennstoffzelle aufweist. Üblicherweise weist eine Brennstoffzellenanordnung eine Vielzahl von Brennstoffzellen auf, die in Form eines oder mehrerer Brennstoffzellenstapel angeordnet sind. Bei der vorliegenden Erfindung werden bevorzugt Polymerelektrolytmembran-Brennstoffzellen verwendet. Die Brennstoffzellen sind in bekannter Weise aufgebaut. Jede Brennstoffzelle wird anodenseitig von Anodenbetriebsgas und kathodenseitig von Kathodenbetriebsgas durchströmt. Die entsprechenden Bereiche werden bei der vorliegenden Erfindung als Kathodenströmungsbereich und Anodenströmungsbereich bezeichnet.

Das abgeschlossene Brennstoffzellensystem weist zwei geschlossene Gaskreisläufe auf, die beide die Brennstoffzellenanordnung einbeziehen. Der Kathodengaskreislauf umfasst einen Kathodenbetriebsgasströmungsweg, den Kathodenströmungsbereich und einen Kathodenabgasströmungsweg, und der Anodengaskreislauf umfasst einen Anodenbetriebsgasströmungsweg, den Anodenströmungsbereich und einen Anodenabgasströmungsweg. In dem Kathodenbetriebsgasströmungsweg strömt frisches Kathodenbetriebsgas zu der Brennstoffzellenanordnung, durchströmt den Kathodenströmungsbereich der Brennstoffzellenanordnung (d.h. die Kathodenströmungsbereiche aller Brennstoffzellen der Anordnung), und schließlich verlässt Kathodenabgas die Brennstoffzellenanordnung in dem Kathodenabgasströmungsweg. In gleicher Weise strömt in dem Anodenbetriebsgasströmungsweg frisches Anodenbetriebsgas zu der Brennstoffzellenanordnung, durchströmt den Anodenströmungsbereich der Brennstoffzellenanordnung (d.h die Anodenströmungsbereiche aller Brennstoffzellen der Anordnung), und schließlich verlässt Anodenabgas die Brennstoffzellenanordnung in dem Anodenabgasströmungsweg.

Bei einem halbgeschlossenen System ist nur der Anodengaskreislauf geschlossen. Kathodenseitig weist das System einen offenen Kathodengasströmungsweg auf, der einen Kathodenbetriebsgasströmungsweg, einen Kathodenströmungsbereich und einen Kathodenabgasströmungsweg umfasst. In dem Kathodenbetriebsgasströmungsweg strömt Luft, die vorzugsweise aus der Umgebung entnommen wird und mittels einer Einrichtung zur Zuführung von Luft wie eines Gebläses, Ventilators oder Lüfters eingespeist wird.

Generell weist das Kathodenbetriebsgas eine bestimmte Sauerstoffkonzentration, d.h. einen vorgegebenen Sollwert der Sauerstoffkonzentration auf, der weniger als 100 Volumenprozent, bevorzugt 20 bis 50 Volumenprozent, besonders bevorzugt 30-40 Volumenprozent, des Kathodenbetriebsgases beträgt. Das Anodenbetriebsgas weist eine bestimmte Wasserstoffkonzentration, d.h. einen vorgegebenen Sollwert der Wasserstoffkonzentration auf, der bevorzugt 50 bis 100 Volumenprozent, besonders bevorzugt 100 Volumenprozent, des Anodenbetriebsgases beträgt. Bei der vorliegenden Erfindung muss wegen des Partialdruckausgleichs die Kathodenbetriebsgaskonzentration etwa gleich der Anodenbetriebsgaskonzentration sein. Ein guter Kompromiss besteht darin, bei dem geschlossenen System der vorliegenden Erfindung sowohl die Wasserstoffkonzentration als auch die Sauerstoffkonzentration auf etwa 40 bis 50 Volumenprozent, besonders bevorzugt 50 Volumenprozent, einzustellen. Bei dem halbgeschlossenen System ist der Sollwert der Sauerstoffkonzentration im Kathodenbetriebsgas vorgegeben durch den Sauerstoffgehalt der Luft, d. h. etwa 21 Volumenprozent. Die Wasserstoffkonzentration muss daher ebenfalls auf etwa 21 Volumenprozent eingestellt werden.

Das Kathodenabgas ist an Sauerstoff verarmt oder enthält keinen Sauerstoff mehr, und das Anodenabgas ist an Wasserstoff verarmt oder enthält keinen Wasserstoff mehr. Das Anodenabgas und das Kathodenabgas enthalten jedoch gasförmiges und flüssiges Wasser, beispielsweise aus der Brennstoffzellenreaktion. Das Anodenabgas und das Kathodenabgas sind "verbrauchte" Gase, die für die Brennstoffzellenreaktion nicht mehr tauglich sind. Sie müssten daher aus dem System entlassen werden, was in bestimmten Fällen jedoch nicht möglich ist. Erfindungsgemäß werden bei einem abgeschlossenen System die Abgase in die entsprechenden Betriebsgase eingespeist (rezirkuliert), d.h. der Kathodenabgasströmungsweg und der Kathodenbetriebsgasströmungsweg sowie der Anodenabgasströmungsweg und der Anodenbetriebsgasströmungsweg "treffen sich" jeweils an einer Übergangsstelle, sodass ein geschlossener Kathodengaskreislauf und ein geschlossener Anodengaskreislauf gebildet werden. Ohne die nachfolgend erläuterten erfindungsgemäßen Maßnahmen würde dieses Rezirkulieren dazu führen, dass sich sowohl in dem Kathodengaskreislauf als auch in dem Anodengaskreislauf die inerten Gasbestandteile und das Wasser in kurzer Zeit stark anreichern würden und die Brennstoffzellenreaktion zum Erliegen käme. Bei einem halbgeschlossenen System wird nur das Anodenabgas rezirkuliert, während das Kathodenabgas aus dem offenen Kathodenabgasströmungsweg in die Umgebung entlassen wird.

Erfindungsgemäß wird bei einem abgeschlossenen System daher in dem Kathodenbetriebsgasströmungsweg regelmäßig oder kontinuierlich die Sauerstoffkonzentration bestimmt und in dem Anodenbetriebsgasströmungsweg regelmäßig oder kontinuierlich die Wasserstoffkonzentration bestimmt. Die Differenz zu dem vorgegebenen Sollwert der Sauerstoffkonzentration beziehungsweise der Wasserstoffkonzentration wird ergänzt durch Einspeisen von Sauerstoff aus einem Sauerstoffvorratsbehälter bis zum Erreichen des vorgegebenen Sauerstoff-Sollwerts in dem Kathodenbetriebsgasströmungsweg, und durch Einspeisen von Wasserstoff aus einem Wasserstoffvorratsbehälter bis zum Erreichen des vorgegebenen Wasserstoff-Sollwerts in dem Anodenbetriebsgasströmungsweg. Die Einspeisestelle von Sauerstoff in den Kathodengaskreislauf definiert die Übergangsstelle, an der der Kathodenabgasströmungsweg in den Kathodenbetriebsgasströmungsweg übergeht. Die Einspeisestelle von Wasserstoff in den Anodengaskreislauf definiert die Übergangsstelle, an der der Anodenabgasströmungsweg in den Anodenbetriebsgasströmungsweg übergeht. Bei einem halbgeschlossenen System kann man entweder davon ausgehen, dass die Sauerstoffkonzentration etwa 21 Volumenprozent beträgt, und soviel Wasserstoff ergänzen, dass im Anodenbetriebsgasströmungsweg eine Wasserstoffkonzentration von 21 Volumenprozent aufrechterhalten wird, oder die Sauerstoffkonzentration präzise bestimmen und dementsprechend Wasserstoff ergänzen, was bevorzugt ist.

Die Menge an Sauerstoff und Wasserstoff, die jeweils zu ergänzen ist (Bei einem halbgeschlossenen System ist nur Wasserstoff zu ergänzen. Ein Nachdosieren von Sauerstoff erübrigt sich, da ständig frische Luft ins System gelangt), kann beispielsweise ermittelt werden durch Anwendung des idealen Gasgesetzes, das für Gasgemische, die vorwiegend aus Wasserstoff und Inertgas beziehungsweise Sauerstoff und Inertgas bestehen, gute Ergebnisse liefert. Das Volumen des Kathodengaskreislaufs und des Anodengaskreislaufs ist bekannt, und die in den Gaskreisläufen herrschenden Drücke und Temperaturen können gemessen werden. Ferner ist die Menge an Inertgas, die sich in dem Kathodengaskreislauf und dem Anodengaskreislauf befindet, d.h der von dem Inertgas in dem Kathodengaskreislauf und dem Anodengaskreislauf ausgeübte Inertgas-Partialdruck, bekannt. Dem vorgegebenen Sollwert der Sauerstoffkonzentration entspricht ein Solldruck in dem Kathodenbetriebsgasströmungsweg, und dem vorgegebenen Sollwert der Wasserstoffkonzentration entspricht ein Solldruck in dem Anodenbetriebsgasströmungsweg. Aus der Differenz zwischen dem Solldruck und dem gemessenen Druck in dem Kathodenbetriebsgasströmungsweg ergibt sich die nachzudosierende Menge an Sauerstoff, und aus der Differenz zwischen dem Solldruck und dem gemessenen Druck in dem Anodenbetriebsgasströmungsweg ergibt sich die nachzudosierende Menge an Wasserstoff. Bei der vorliegenden Erfindung sind geeignete Einrichtungen zum Vergleichen der gemessenen Drücke mit vorgegebenen Solldrücken und zum Zuführen der benötigten Gasmengen vorgesehen. Geeignete derartige Einrichtungen sind beispielsweise Druckminderer in dem Sauerstoffströmungsweg zu dem Kathodengaskreislauf beziehungsweise in dem Wasserstoffströmungsweg zu dem Anodengaskreislauf. Das bei der Reaktion entstehende Produktwasser bzw. der Anteil an gasförmigem Produktwasser an den Gasgemischen kann zu Beginn berechnet werden und bei der Einstellung des benötigten Inertgasdrucks berücksichtigt werden.

Die Solldrücke im Anodengaskreislauf und im Kathodengaskreislauf bzw. Kathodengasströmungsweg sind gleich und liegen bevorzugt im Bereich von 300 bis 1000 hPa (Überdruck). Die Temperaturen sind ebenfalls gleich und liegen bevorzugt im Bereich von 54 °C bis 65 °C.

Bei einem halbgeschlossenen System wird die Einhaltung eines gewünschten Solldrucks im Kathodengasströmungsweg gewährleistet durch Vorsehen einer Einrichtung im Kathodenabgasströmungsweg, die bei Erreichen des Solldrucks den Strömungsweg nach außen freigibt und gleichzeitig eine etwaige Strömung von außen in den Kathodenabgasströmungsweg hinein verhindert. Geeignete Einrichtungen sind beispielsweise ein Rückschlagventil wie ein federbelastetes Rückschlagventil, oder eine Drosselklappe. Die Zuführung des Betriebsgases Luft erfolgt bei dem halbgeschlossenen System bevorzugt mittels einer Einrichtung, die gleichzeitig eine Strömungsgeschwindigkeit in dem Kathodengasströmungsweg erzeugt, wie beispielsweise ein Gebläse. Ein Nachdosieren von Sauerstoff erübrigt sich. Wasserstoff wird nachdosiert wie oben für das geschlossene System beschrieben.

Alternativ zum Konstanthalten der Drücke in dem Kathodengaskreislauf und dem Anodengaskreislauf können auch die Massendurchflüsse konstant gehalten werden. Zu diesem Zweck sind Massendurchflussmesser in dem Kathodengaskreislauf bzw. dem Anodengaskreislauf vorzusehen. Mittels der Druckminderer wird dann jeweils so viel Sauerstoff (nur bei dem abgeschlossenen System) bzw. Wasserstoff nachdosiert, dass die Massendurchflüsse in dem Kathodengaskreislauf und dem Anodengaskreislauf konstant bleiben. Werden anstelle von Massendurchflussmessern Massendurchflussregler verwendet, sind keine Druckminderer erforderlich. Vielmehr kann die Zuführung der erforderlichen Mengen der jeweiligen Gase mittels der Massendurchflussregler erfolgen.

Eine kontinuierliche Anreicherung von Wasser in dem Kathodengaskreislauf und dem Anodengaskreislauf

eines abgeschlossenen Systems wird verhindert, indem das Kathodenabgas und das Anodenabgas jeweils durch Einrichtungen zum Abtrennen von flüssigem Wasser geleitet werden. Geeignete derartige Einrichtungen sind beispielsweise Wasserabscheider. Das flüssige Wasser sammelt sich in den Wasserabscheidern, während Inertgas, gasförmiges Wasser und etwaiger in dem Abgas vorhandener unverbrauchter Sauerstoff beziehungsweise unverbrauchter Wasserstoff in den Kathodenbetriebsgasströmungsweg beziehungsweise den Anodenbetriebsgasströmungsweg rezirkuliert werden. Bei einem halbgeschlossenen System sind Wasserabscheider im Kathodengasströmungsweg optional.

Für eine zuverlässige und gleichmäßige Funktion der Brennstoffzellen ist es auch sehr wichtig, dass das Kathodenbetriebsgas und das Anodenbetriebsgas möglichst homogen in allen Brennstoffzellen der Brennstoffzellenanordnung und in allen Zonen der Kathodenströmungsbereiche beziehungsweise Anodenströmungsbereiche verteilt wird und dass insbesondere die Kathodenströmungsbereiche und die Anodenströmungsbereiche frei von flüssigem Wasser gehalten werden. Erfindungsgemäß wird dies durch das Erzeugen einer geeigneten Strömungsgeschwindigkeit der Gase in dem Kathodengaskreislauf und dem Anodengaskreislauf erreicht. Eine geeignete Strömungsgeschwindigkeit in dem Kathodengaskreislauf und in dem Anodengaskreislauf ist beispielsweise jeweils etwa 2 bis 4 m/s, bevorzugt jeweils etwa 3 m/s. Zur Aufrechterhaltung der Strömungsgeschwindigkeiten können beispielsweise eine Rezirkulationspumpe in dem Kathodenabgasströmungsweg und eine Rezirkulationspumpe in dem Anodenabgasströmungsweg vorgesehen werden. Das Umpumpen der Gase sorgt zudem für eine homogene Durchmischung der Gasbestandteile. Ohne künstliches Erzeugen einer Strömung in dem Kathodengaskreislauf und im Anodengaskreislauf, beispielsweise durch eine Rezirkulationspumpe, würde zwar der verbrauchte Sauerstoff durch nachdosierten Sauerstoff ersetzt werden und der verbrauchte Wasserstoff durch nachdosierten Wasserstoff ersetzt werden, aber die Verteilung der nachdosierten Reaktionsgase verliefe langsam und äußert inhomogen, und das gebildete Reaktionswasser würde nicht aus den Brennstoffzellen abtransportiert werden. Die Brennstoffzellen würden praktisch im Dead-End-Betrieb betrieben werden. Die Brennstoffzellen würden schließlich "geflutet" werden und die Brennstoffzellenreaktion zum Erliegen kommen. Bei einem halbgeschlossenen System sind Einrichtungen wie eine Pumpe im Kathodengasströmungsweg optional, da als Luftquelle typischerweise Einrichtungen verwendet werden, die an sich bereits für eine Strömung sorgen, z. B. Gebläse.

Die Rezirkulationspumpe wird von Anfang an betrieben. Während des Betriebs wird bevorzugt in regelmäßigen Abständen, abhängig von der Energieerzeugung, kurzzeitig die Pumpleistung erhöht, beispielsweise in Abständen von etwa 3 Amperestunden. So wird ein Gasstau oder eine Ansammlung von Wasser in "toten Ecken" vermieden. Anstelle einer Rezirkulationspumpe kann auch eine Strahldüse verwendet werden, beispielsweise eine Venturidüse.

Soll das Brennstoffzellensystem über längere Zeiträume Energie liefern, beispielsweise für mehrere Tage oder mehrere Wochen, fallen auch größere Mengen an Reaktionswasser an. In einem solchen Fall ist es sinnvoll, die Einrichtungen zum Abtrennen von Wasser in den Abgasströmungswegen so auszubilden, dass das abgetrennte flüssige Wasser abgelassen und in einem separaten größeren Sammelbehälter gesammelt werden kann. Hierfür werden beispielsweise die Wasserabscheider in den Abgasströmungswegen mit Füllstandsschaltern und Wasserablassventilen ausgestattet. Wenn das Wasser in den Wasserabscheidern einen bestimmten Füllstand erreicht hat, wird das Wasserablassventil für eine vorbestimmte Zeit, beispielsweise etwa 2 s, geöffnet und das ausströmende Wasser in einen größeren Sammelbehälter geleitet, vorteilhafterweise unterstützt durch eine Wasserpumpe. Um sicherzustellen, dass kein Gas aus den Abgasströmungswegen durch die Wasserabscheider austreten kann, können auch am Auslass der Wasserabscheider Füllstandsschalter vorgesehen werden, die die Wasserablassventile rechtzeitig schließen. Die Wasserablassventile und die jeweiligen Füllstandsschalter können jeweils anodenseitig und/oder kathodenseitig vorgesehen werden. Bei halbgeschlossenen Systemen sind kathodenseitige Wasserabscheider optional.

Wie vorstehend angegeben, wird die Brennstoffzellenanordnung mit einem Kathodenbetriebsgas und einem Anodenbetriebsgas betrieben, wobei die Sauerstoffkonzentration in dem Kathodenbetriebsgas einen vorgegebenen Sollwert aufweist, und die Wasserstoffkonzentration in dem Anodenbetriebsgas ebenfalls einen vorgegebenen Sollwert aufweist. Bevor das Brennstoffzellensystem jedoch den Betrieb mit den vorgegebenen Konzentrationen an Sauerstoff und Wasserstoff aufnehmen kann, müssen diese Konzentrationen erst eingestellt werden. Zu diesem Zweck wird bei jeder Inbetriebnahme eines abgeschlossenen Brennstoffzellensystems, und vor der Inbetriebnahme der Brennstoffzellenanordnung, der Kathodengaskreislauf und der Anodengaskreislauf mit der für den Betrieb des Brennstoffzellensystems erforderlichen Inertgasmenge befüllt. Die erforderliche Inertgasmenge kann wiederum mittels des idealen Gasgesetzes berechnet werden, da sowohl die Volumina des Kathodengaskreislaufs und des Anodengaskreislaufs als auch die gewünschten Sollwerte der Sauerstoffkonzentration und der Wasserstoffkonzentration, sowie die gewünschten Betriebsbedingungen des Brennstoffzellensystems und die Befüllungstemperatur bekannt sind. Ebenfalls bekannt ist die Menge an gasförmigem Wasser, die bei der Brennstoffzellenreaktion gebildet wird und die in dem Kathodengaskreislauf und dem Anodengaskreislauf mitgeführt wird. Diese Menge kann von der Systemelektronik zu Beginn berechnet werden und bei der Einstellung des benötigten Inertgasdrucks berücksichtigt werden.

Bei vorgegebenen Betriebsbedingungen (Druck, Temperatur) des Brennstoffzellensystems hat das Gas in dem Kathodengaskreislauf eines abgeschlossenen Systems einen vorgegebenen Druck (Solldruck) und eine vorgegebene Temperatur. Eine gewünschte, d.h vorgegebene Sauerstoffkonzentration (Soll-Sauerstoffkonzentration) in dem Kathodenbetriebsgas entspricht dabei ein bestimmten Sauerstoffpartialdruck (Soll-Sauerstoffpartialdruck) und einem bestimmten Inertgaspartialdruck (Soll-Inertgaspartialdruck) in dem Kathodenbetriebsgas. Analog hat das Gas in dem Anodengaskreislauf eine gewünschte, d.h. vorgegebene Wasserstoffkonzentration (Soll-Wasserstoffkonzentration), die einem bestimmten Wasserstoffpartialdruck (Soll-Wasserstoffpartialdruck) und einem bestimmten Soll-Inertgaspartialdruck in dem Anodenbetriebsgas entspricht.

Vor der Inbetriebnahme der Brennstoffzellenanordnung beziehungsweise vor Beginn der Stromentnahme aus der Brennstoffzellenanordnung eines abgeschlossenen Systems werden die Betriebsgasgemische in dem Kathodengaskreislauf und dem Anodengaskreislauf aus ihren jeweiligen Komponenten hergestellt, die sich jeweils in geeigneten Vorratsbehältern, beispielsweise Druckgasflaschen, befinden. Es gibt getrennte Vorratsbehälter für Inertgas, Wasserstoff und Sauerstoff.

Als Inertgas wird bevorzugt Stickstoff verwendet. Die Erfindung wird nachfolgend anhand von Stickstoff als Inertgas beschrieben, das heißt das Kathodenbetriebsgas ist "künstliche Luft". Die vorliegende Erfindung ist jedoch in keiner Weise auf Stickstoff als Inertgas beschränkt. Vielmehr können bei einem abgeschlossenen System auch andere Inertgase, wie Edelgase, verwendet werden. Ein bevorzugtes Edelgas ist Helium, mit dem sich besonders hohe Brennstoffzellen-Leistungen erzielen lassen, da seine Anwesenheit die Brennstoffzellenreaktion weniger behindert als beispielsweise die Anwesenheit von Stickstoff. Im Kathodengaskreislauf und im Anodengaskreislauf wird dasselbe Inertgas verwendet. Beim Betrieb mit natürlicher Luft ist das Inertgas natürlich stets Stickstoff.

Vor der Inbetriebnahme befinden sich die Gaskreisläufe unter Atmosphärendruck und sind mit Inertgas gefüllt. Erforderlichenfalls wird vor der Inbetriebnahme eine Spülung mit dem Inertgas, das im Betrieb verwendet wird, z. B. Stickstoff, durchgeführt. Dann wird der Kathodengaskreislauf mit Inertgas (hier Stickstoff) gefüllt bis der dem Soll-Inertgaspartialdruck entsprechende Stickstoffdruck erreicht ist. Dabei ist zu berücksichtigen, dass beim Befüllen meist eine andere Temperatur herrscht als die Betriebstemperatur, typischerweise eine niedrigere. Der Stickstoffdruck, der in dem Kathodengaskreislauf eingestellt wird, muss entsprechend angepasst werden. Zeitgleich mit der Befüllung des Kathodengaskreislaufs wird der Anodengaskreislauf mit Stickstoff gefüllt, das heißt in dem Anodengaskreislauf wird derselbe Stickstoffdruck eingestellt wie in dem Kathodengaskreislauf, bzw. umgekehrt. Es ist erforderlich, beide Gaskreisläufe etwa zeitgleich zu füllen, denn wenn nur einer der beiden Gaskreisläufe mit Stickstoff gefüllt würde, würde der Stickstoff in den Brennstoffzellen durch die Brennstoffzellenmembranen hindurch auf die Seite mit dem geringeren Stickstoff-Partialdruck diffundieren. Dieser Prozess würde solange anhalten, bis ein Partialdruckausgleich erreicht ist, also beiderseitig der Membranen derselbe Stickstoffdruck herrscht.

Der Stickstoff wird aus einem Stickstoffvorratsbehälter durch Inertgasströmungswege in den Kathodengaskreislauf und den Anodengaskreislauf eingespeist, beispielsweise an der selben Stelle, an der auch Sauerstoff beziehungsweise Wasserstoff eingespeist werden. Alternativ sind auch andere Einspeisestellen möglich. Die Einstellung des erforderlichen Stickstoffpartialdrucks kann analog zur Einstellung der Soll-Betriebsgasdrücke durchgeführt werden, d.h. es werden bevorzugt Druck und Temperatur in den Brennstoffzellengaskreisläufen (Kathodengaskreislauf und Anodengaskreislauf) gemessen, errechnet, wie hoch der Stickstoffpartialdruck bei der gemessenen Temperatur sein muss, und dann mittels einer Einrichtung wie einem Druckminderer in dem Inertgasströmungsweg der gemessene Stickstoffdruck mit dem errechneten Soll-Stickstoffpartialdruck verglichen und so lange Stickstoff nachgeführt, bis der gemessene Stickstoffdruck dem Soll-Stickstoffdruck entspricht. Alternativ kann auch der Massendurchfluss gemessen werden und als Einrichtung zur Zuführung von Inertgas beispielsweise ein Massendurchflussregler verwendet werden.

Dann werden Sauerstoff und Wasserstoff in den Kathodengaskreislauf beziehungsweise den Anodengaskreislauf eindosiert bis der Kathodenbetriebsgas-Solldruck beziehungsweise der Anodenbetriebsgas-Solldruck erreicht wird, unter Berücksichtigung der beim Befüllen herrschenden Temperatur. Das Einspeisen von Sauerstoff und das Einspeisen von Wasserstoff sollte bevorzugt im Wesentlichen gleichzeitig geschehen, um den Differenzdruck zwischen der Anodenseite und der Kathodenseite in den Brennstoffzellen möglichst gering zu halten. Es wird ein definiertes Konzentrationsverhältnis von Wasserstoff zu Sauerstoff eingestellt. Der Differenzdruck zwischen dem eingestellten Inertgaspartialdruck und dem eingestellten Betriebsgasdruck (Anodenbetriebsgasdruck, Kathodenbetriebsgasdruck) entspricht dem Reaktionsgaspartialdruck (Sauerstoffpartialdruck, Wasserstoffpartialdruck). Das Verhältnis von Wasserstoffpartialdruck zu Sauerstoffpartialdruck entspricht dem Konzentrationsverhältnis von Wasserstoff zu Sauerstoff. Bei der vorliegenden Erfindung sind die Partialdrücke von Wasserstoff und Sauerstoff etwa gleich. Da bei der Reaktion doppelt so viel Wasserstoff verbraucht wird wie Sauerstoff, muss während des Brennstoffzellenbetriebs eine entsprechend höhere Menge an Wasserstoff nachdosiert werden.

Nach dem Einstellen der Sollkonzentrationen von Wasserstoff und Sauerstoff in den Brennstoffzellenbetriebsgasen kann die Inbetriebnahme der Brennstoffzellenanordnung, d.h. die Aufnahme des kontinuierlichen Betriebs und die Entnahme von elektrischem Strom, erfolgen.

Bei einem halbgeschlossenen System, das einen geschlossenen Anodengaskreislauf und einen offenen Kathodengasströmungweg aufweist, braucht vor der Inbetriebnahme des Brennstoffzellensystems nur im Anodengaskreislauf die vorgegebene Wasserstoffkonzentration eingestellt zu werden. Diese entspricht der Sauerstoffkonzentration in der Umgebungsluft, die kathodenseitig als Betriebsgas verwendet wird. Unter Betriebsbedingungen herrschen im Anodengaskreislauf und im Kathodengasströmungsweg dieselben Temperaturen und Soll-Betriebsgasdrücke, analog dem

geschlossenen System.

Bei einem halbgeschlossenen System wird als erstes in den Kathodengasströmungsweg Luft zugeführtund zeitgleich in den Anodengaskreislauf Stickstoff einströmen lassen, wobei ein Stickstoffpartialdruck eingestellt wird, der dem Stickstoffpartialdruck in der Luft im Kathodengasströmungsweg entspricht. Anschließend wird Wasserstoff in den Anodengaskreislauf eindosiert, bis in dem Anodengaskreislauf und dem Kathodengasströmungsweg derselbe Druck herrscht. Die Vorgehensweise ist im Prinzip dieselbe wie sie oben für ein abgeschlossenes System beschrieben wurde mit der Ausnahme, dass die oben beschriebenen Schritte nur anodenseitig durchgeführt werden, während kathodenseitig beständig Luft durch den Kathodengasströmungsweg strömt. Bei dieser Vorgehensweise gib es anfangs eine Druckdifferenz zwischen dem Anodengaskreislauf und dem Kathodengasströmungsweg, die jedoch im tolerablen Bereich liegt.

Nach dem Abschalten des Brennstoffzellensystems verbleibt Gas in den Gasströmungswegen und flüssiges Wasser in den Wasseraufnahmebehältern. Vor einer erneuten Inbetriebnahme des Brennstoffzellensystems sollte das Wasser aus den Wasseraufnahmebehältern entleert werden und bevorzugt auch das Gas aus dem Kathodengaskreislauf bzw. dem Kathodengasströmungsweg und dem Anodengaskreislauf entfernt werden. Zu diesem Zweck können geeignete Öffnungen oder Ventile in den Behältern beziehungsweise den Gasströmungswegen vorgesehen werden. Bevorzugt wird zwischen zwei Einsätzen beziehungsweise zwischen zwei Betriebszeiten des Brennstoffzellensystems der Kathodengaskreislauf bzw. der Kathodengasströmungsweg und der Anodengaskreislauf mit Inertgas durchgespült, um etwaiges Restwasser zu entfernen und um eine geeignete Gasfüllung für einen Neustart des Systems bereitzustellen.

Wenn das Brennstoffzellensystem bei einem relativ geringen Überdruck und/oder einer relativ geringen Inertgaskonzentration betrieben werden soll, kann es sein, dass die Inertgasmenge, die sich vor der Inbetriebnahme in den Gaskreisläufen befindet, zu groß ist, d.h. der einzustellende Soll-Inertgaspartialdruck ist geringer als der Atmosphärendruck bzw. Umgebungsdruck. In einem solchen Fall werden die Gaskreisläufe (bzw. der Anodengaskreislauf bei einem halbgeschlossenen System) bis zu dem gewünschten Soll-Inertgaspartialdruck evakuiert oder bis zu einem Druck unterhalb des einzustellenden Soll-Inertgaspartialdrucks evakuiert und dann der gewünschte Soll-Inertgaspartialdruck durch Zuführung von Inertgas eingestellt.

Um möglichst wenig Wasserstoff in die Umgebung, d. h. in die Atmosphäre, zu entlassen, kann ein sog. Bleedingwiderstand zwischen Anodenendplatte und Kathodenendplatte geschaltet werden. Der zuschaltbare Bleedingwiderstand führt dazu, dass nach dem Abschalten des Systems in dem System verbleibende Reaktionsgase verbraucht werden und im Wesentlichen Inertgas in dem Kathodengaskreislauf und dem Anodengaskreislauf zurückbleibt.

Aus Sicherheitsgründen ist es bevorzugt, in dem Kathodengaskreislauf bzw. dem Kathodengasströmungsweg und/oder dem Anodengaskreislauf, bevorzugt in beiden, jeweils einen Druckschalter vorzusehen, der den Druck des Kathodenbetriebsgases beziehungsweise des Anodenbetriebsgases überwacht und bei Überschreiten des Maximaldrucks das System über eine Sicherheitsschaltung in einem sicheren Zustand schaltet. Bei Überschreiten des Maximaldrucks wird die Gaszuführung unterbrochen. Die Unterbrechung der Gaszuführung wird von der Sicherheitslogik des Brennstoffzellensystems erfasst und das System abgeschaltet.

Als weitere Sicherheitseinrichtungen können in den Gasströmungswegen von den Gasvorratsbehältern zu dem Kathodengaskreislauf beziehungsweise dem Anodengaskreislauf Absperrventile vorgesehen werden, um ein versehentliches Einspeisen des betreffenden Gases (Wasserstoff und/oder Stickstoff und/oder Sauerstoff) zum falschen Zeitpunkt zu verhindern. Weitere sinnvolle Sicherheitseinrichtungen sind Rückschlagventile in den Gasströmungswegen von den Gasvorratsbehältern (Wasserstoff und/oder Stickstoff und/oder Sauerstoff) zu den Gaseinspeisestellen in dem Kathodengaskreislauf und dem Anodengaskreislauf, um ein Rückströmen der Betriebsgase zu verhindern, falls fälschlicherweise doch einmal sowohl Inertgas als auch Sauerstoff in den Kathodengaskreislauf (beim geschlossenen System) eingespeist werden sollte, beziehungsweise fälschlicherweise sowohl Inertgas als auch Wasserstoff in den Anodengaskreislauf eingespeist werden sollte.

Abgeschlossene und halbgeschlossene erfindungsgemäße Systeme sind anodenseitig grundsätzlich identisch. Insbesondere weisen beide anodenseitig bevorzugt eines oder mehrere der folgenden Merkmale auf, die in beliebigen Kombinationen miteinander vorliegen können.

Das Brennstoffzellensystem weist eine Einrichtung zum Einspeisen von entweder Wasserstoff aus dem Wasserstoffströmungsweg oder von Stickstoff aus dem Stickstoffströmungsweg in den Anodengaskreislauf an der Übergangsstelle des Anodengaskreislaufs auf.

Die Einrichtung zur Zuführung von Stickstoff zu dem Anodengaskreislauf ist ein Druckminderer in dem Stickstoffströmungsweg und/oder die Einrichtung zur Zuführung von Wasserstoff zu dem Anodengaskreislauf ist ein Druckminderer in dem Wasserstoffströmu ngsweg.

Der Anodengaskreislauf weist eine Einrichtung zur Erzeugung eines Drucks unterhalb des Umgebungsdrucks in dem Anodengaskreislauf auf.

Das Brennstoffzellensystem weist mindestens einen Behälter zum Speichern von flüssigem Wasser auf, der fluidmäßig mit der Einrichtung zum Abtrennen von flüssigem Wasser aus dem Anodenabgas, bevorzugt über eine Wasserpumpe, verbunden ist.

Das Brennstoffzellensystem weist einen Füllstandsschalter in der Einrichtung zum Abtrennen von flüssigem

Wasser aus dem Anodenabgas und/oder eine Einrichtung zum Entlassen von Gas aus dem Anodenabgasströmungsweg auf.

Das Brennstoffzellensystem weist ein Rückschlagventil und/oder ein Absperrventil in dem Stickstoffströmungsweg von der Stickstoffquelle zu dem Anodengaskreislauf auf.

Das Brennstoffzellensystem weist einen Druckschalter in dem Anodengaskreislauf auf.

Beim Betreiben des Brennstoffzellensystems herrscht in dem Anodengaskreislauf ein Überdruck von 300 bis 1000 hPa und/oder die Gasströmungsgeschwindigkeit in dem Anodengaskreislauf beträgt 2 bis 4 m/s. Betriebsdruck und Gasströmungsgeschwindigkeiten sind jeweils in dem Anodengaskreislauf und in dem Kathodengaskreislauf bzw. dem Kathodengasströmungsweg identisch.

Das erfindungsgemäße Brennstoffzellensystem ist grundsätzlich zur Versorgung beliebiger Verbraucher mit elektrischer Energie geeignet. Besonders zum Tragen kommen die Vorteile des erfindungsgemäßen Brennstoffzellensystems bei allen Verbrauchersystemen, die in sich abgeschlossen sein sollen oder müssen, sei es aus technischen oder sonstigen Gründen, wie beispielsweise bei Geräten, die in geschlossenen Räumen oder Fahrzeugen verwendet werden sollen, insbesondere in Unterwasserfahrzeugen.

Die Erfindung wird nachfolgend anhand von Figuren noch weiter veranschaulicht. Es wird darauf hingewiesen, dass die Figuren weder maßstabsgetreu noch proportionsgetreu sind. Außerdem sind nur die zum Verständnis der vorliegenden Erfindung wesentlichen Merkmale dargestellt. Es versteht sich, dass zusätzliche Merkmale vorhanden sein können beziehungsweise dass nicht alle dargestellten Merkmale für die Funktion der vorliegenden Erfindung wesentlich sind. Es zeigen:

Fig. 1 eine schematische Darstellung einer Ausführungsform eines erfindungsgemäßen Brennstoffzellensystems,

Fig. 2 eine schematische Darstellung einer alternativen Ausführungsform eines erfindungsgemäßen Brennstoffzellensystems, und

Fig. 3 eine schematische Darstellung einer weiteren alternativen Ausführungsform eines erfindungsgemäßen Brennstoffzellensystems.

Fig. 1 zeigt eine schematische Darstellung eines erfindungsgemäßen abgeschlossenen Brennstoffzellensystems 1. Das Brennstoffzellensystem 1 weist eine Brennstoffzellenanordnung 2 auf, die in der dargestellten Ausführungsform aus einer einzigen Brennstoffzelle 3 besteht. In der Realität weist eine Brennstoffzellenanordnung eine Vielzahl von Brennstoffzellen auf, typischerweise mehrere Brennstoffzellenstapel mit jeweils einer Mehrzahl von Brennstoffzellen. Die Brennstoffzellen sind von an sich konventioneller Bauart, beispielsweise Polymerelektrolytmembran-Brennstoffzellen mit einer Kathode 10 und einer Anode 20, die jeweils möglichst vollflächig mit Betriebsgas versorgt werden. Das Betriebsgas strömt typischerweise in Strömungsfeldern, die in Fig. 1 schematisch als Kathodenströmungsbereich 13 und Anodenströmungsbereich 23 dargestellt sind. Zur Kühlung weist die dargestellte Brennstoffzelle 3 eine Kühlplatte 8 auf.

Das Brennstoffzellensystem wird mit künstlicher Luft betrieben, d.h. mit einem Gemisch aus Sauerstoff und Stickstoff, wobei der Sauerstoffgehalt der künstlichen Luft bevorzugt 20 bis 50 Volumenprozent, besonders bevorzugt 40 bis 50 Volumenprozent, beträgt. Die künstliche Luft wird während des Betriebs des Brennstoffzellensystems 1 kontinuierlich aus den Komponenten Sauerstoff und Stickstoff erzeugt und der Brennstoffzellenanordnung 2 zugeführt. Das anodenseitige Betriebsgas ist ein Gemisch aus Wasserstoff und Stickstoff, das ebenfalls während des Betriebs des Brennstoffzellensystems 1 kontinuierlich aus den Komponenten Wasserstoff und Stickstoff erzeugt und der Brennstoffzellenanordnung 2 zugeführt wird. Die Wasserstoffkonzentration in dem Anodenbetriebsgas ist gleich der Sauerstoffkonzentration in dem Kathodenbetriebsgas.

Die Reaktionsgase Sauerstoff und Wasserstoff sowie das Inertgas Stickstoff werden in geeigneten Vorratsbehältern bereitgestellt, in der dargestellten Ausführungsform eine Sauerstoff-Druckgasflasche 30, eine Wasserstoff-Druckgasflasche 40 und eine Stickstoff-Druckgasflasche 50. Der Stickstoff-Vorratsbehälter kann sehr viel kleiner sein als die Reaktionsgas-Vorratsbehälter, da Stickstoff bei der Brennstoffzellenreaktion nicht verbraucht wird, sondern vielmehr während des gesamten Brennstoffzellenbetriebs dieselbe Stickstoffmenge im Kreis geführt wird. Die Größe der Reaktionsgas-Vorratsbehälter richtet sich nach der geplanten Brennstoffzellenbetriebsdauer. Die Vorratsbehälter sind natürlich nicht auf Druckgasflaschen beschränkt.

Ein wesentlicher Aspekt der vorliegenden Erfindung ist die Ausbildung des Brennstoffzellensystems mit einem geschlossenen Kathodengaskreislauf 11, in den wahlweise Stickstoff oder Sauerstoff eingespeist wird, und mit einem geschlossenen Anodengaskreislauf 21, in den wahlweise Wasserstoff oder Stickstoff eingespeist wird. Der Kathodengaskreislauf 11 setzt sich zusammen aus einem Kathodenbetriebsgasströmungsweg 12, der am Brennstoffzellen-Gaseinlass in den Kathodenströmungsbereich 13 übergeht, der wiederum am Brennstoffzellen-Gasauslass in einen Kathodenabgasströmungsweg 14 übergeht. Der Kathodenabgasströmungsweg 14 wiederum mündet an einer Übergangsstelle 15 in den Kathodenbetriebsgasströmungsweg 12. Der Anodengaskreislauf 21 setzt sich zusammen aus einem Anodenbetriebsgasströmungsweg 22, der am Brennstoffzellen-Gaseinlass in den Anodenströmungsbereich 23 übergeht, der wiederum am Brennstoffzellen-Gasauslass in einen Anodenabgasströmungsweg 24 übergeht. Der Anodenabgasströmungsweg 24 mündet an einer Übergangsstelle 25 in den Anodenbetriebsgasströmungsweg 22. Das Brennstoffzellensystem der vorliegenden Erfindung ist also dazu ausgelegt, die Brennstoffzellenabgase vollständig zu rezirkulieren und kein Abgas in die Umgebung zu entlassen. Die Strömungswege sind Schlauchleitungen oder Rohrleitungen.

Der Kathodenströmungsbereich 13 und der Anodenströmungsbereich 23 sind üblicherweise "aufgefächert", d.h. am Brennstoffzellen-Gaseinlass befinden sich Gasverteiler, die das Kathodenbetriebsgas und das Anodenbetriebsgas möglichst gleichmäßig über die gesamte Brennstoffzellenanordnung 2 verteilen, und am Brennstoffzellen-Gasauslass befinden sich Sammler, die das Kathodenabgas und das Anodenabgas sammeln und in den Kathodenabgasströmungsweg 14 bzw. den Anodenabgasströmungsweg 24 einspeisen.

Ein Drucksensor 18 in dem Kathodenbetriebsgasströmungsweg 12 und ein Temperatursensor 19 in dem Kathodenabgasströmungsweg 14 dienen der Ermittlung von Gasdruck und Gastemperatur in dem Kathodengaskreislauf 11. Ein Drucksensor 28 in dem Anodenbetriebsgasströmungsweg 22 und ein Temperatursensor 29 in dem Anodenabgasströmungsweg 24 dienen der Ermittlung von Druck und Temperatur des Gases in dem Anodengaskreislauf 21. Es ist aber auch ausreichend, nur einen der Temperatursensoren 19, 29 vorzusehen, bevorzugt den Temperatursensor 19 im Kathodengaskreislauf, da die Gastemperaturen im Anodengaskreislauf und im Kathodengaskreislauf sowohl während des Befüllens als auch während des Betriebs des Brennstoffzellensystems etwa gleich sind. Darüber hinaus können sich die Sensoren an einer beliebigen Stelle im Kathodengaskreislauf 11 und im Anodengaskreislauf 21 befinden. Aus dem gemessenen Druck und der gemessenen Temperatur kann die Systemelektronik die Menge des in dem Kathodengaskreislauf 11 und in dem Anodengaskreislauf 21 vorhandenen Gases errechnen.

In der dargestellten Ausführungsform wird Sauerstoff aus der Druckgasflasche 30 über einen Sauerstoffströmungsweg 31 (Sauerstoffleitung 31), in dem sich ein Druckminderer 33 befindet, einem Ventil 32 zur Einspeisung in den Kathodengaskreislauf 11 zugeleitet. Wasserstoff wird aus der Druckgasflasche 40 über einen Wasserstoffströmungsweg (Wasserstoffleitung) 41, in dem sich ein Druckminderer 43 befindet, einem Ventil 42 zur Einspeisung in den Anodengaskreislauf 21 zugeleitet. Stickstoff wird aus einer Druckgasflasche 50 über einen Inertgasströmungsweg 51, 52 dem Ventil 32 zur Einspeisung in den Kathodengaskreislauf 11 zugeleitet, und gleichermaßen über einen Inertgasströmungsweg 51, 54 dem Ventil 42 zur Einspeisung in den Anodengaskreislauf 21 zugeleitet. In dem Teilbereich 51 des Inertgasströmungswegs befinden sich ein Druckminderer 53 sowie ein optionales Absperrventil 55, das es ermöglicht, ein Einströmen von Stickstoff in den Kathodengaskreislauf 11 und den Anodengaskreislauf 21 zum falschen Zeitpunkt zuverlässig auszuschließen. Durch das Vorsehen des Druckminderers 53 in dem Teilbereich 51 des Inertgasströmungswegs wird sichergestellt, dass in dem Kathodengaskreislauf 11 und dem Anodengaskreislauf 21 derselbe Inertgas-Partialdruck eingestellt wird.

In der dargestellten Ausführungsform werden Stickstoff und Sauerstoff über eine gemeinsame Einrichtung 32, die entweder die Einspeisung von Sauerstoff oder die Einspeisung von Stickstoff ermöglicht, wie ein Ventil, das zwischen einer Zuführung von Sauerstoff und einer Zuführung von Stickstoff umschaltbar ist, an einer Einspeisestelle (Übergangstelle) 15 in den Kathodengaskreislauf 11 eingespeist. Stickstoff und Wasserstoff werden analog über ein gemeinsames Ventil 42, das zwischen einer Zuführung von Wasserstoff und einer Zuführung von Stickstoff umschaltbar ist, an einer Einspeisestelle (Übergangsstelle) 25 in den Anodengaskreislauf 21 eingespeist. Geeignete Ventile 32 beziehungsweise 42 sind beispielsweise 3-2-Wege-Magnetventite. Generell werden für alle Ventile vorzugsweise Magnetventile verwendet.

Alternativ ist es auch möglich, Sauerstoff und Stickstoff getrennt dem Kathodengaskreislauf 11 zuzuführen und/oder Wasserstoff und Stickstoff getrennt dem Anodengaskreislauf 21 zuzuführen. Die Einspeisestelle von Sauerstoff definiert dabei die Übergangsstelle 15, und die Einspeisestelle von Wasserstoff definiert die Übergangsstelle 25. Die Einspeisung von Stickstoff kann prinzipiell an einer beliebigen Stelle des Kathodengaskreislaufs 11 bzw. des Anodengaskreislaufs 21 erfolgen, natürlich außerhalb der Brennstoffzellen selbst. Bei einer getrennten Zuführung ist es bevorzugt, in dem Inertgasströmungsweg, dem Sauerstoffströmungsweg und dem Wasserstoffströmungsweg jeweils ein Absperrventil vorzusehen, um zu verhindern, dass Stickstoff und Sauerstoff gleichzeitig in den Kathodengaskreislauf eingespeist werden bzw. dass Stickstoff und Wasserstoff gleichzeitig in den Anodengaskreislauf eingespeist werden.

Die Brennstoffzellenanordnung 2 wird kathodenseitig mit künstlicher Luft betrieben, beispielsweise mit einem Sauerstoffanteil von 50 Volumenprozent, und anodenseitig mit einem Wasserstoff/Stickstoff-Gemisch. Wenn der Sauerstoffanteil 50 Volumenprozent beträgt, beträgt auch der Wasserstoffanteil 50 Volumenprozent. Bevor mit dem kontinuierlichen Brennstoffzellenbetrieb und der Energieentnahme begonnen wird, werden der Anodengaskreislauf 21 und der Kathodengaskreislauf 11 mit den gewünschten Betriebsgasen gefüllt. Die Vorgehensweise wird nachfolgend an einem konkreten Zahlenbeispiel erläutert.

Aus der mit sehr guter Näherung anwendbaren Formel p.V = $p \cdot V = \frac{m}{M} \cdot R \cdot T$ (p= Druck; V= Volumen; m=

Masse; M= Molmasse; R= Gaskonstante; T= Temperatur) folgt, dass für die Einstellung der gewünschten Reaktionsgaskonzentrationen (Sollkonzentrationen) Druck und Temperatur sowie Masse und Molmasse der beteiligten Gase und das zu füllende Volumen von Bedeutung sind.

Für ein beispielhaftes Volumen des Kathodengaskreislaufs von $V_g$ = 0,0035 $m^3$, einen gewünschten Reaktionsdruck (Solldruck) des Kathodenbetriebsgases von $p_g$= 4451 hPa absolut (445100 $kg\cdot m^{-1}\cdot s^{-2}$ absolut), eine Temperatur des Gases im Kathodengaskreislauf von $T_g$= 327 K (54°C) und eine gewünschte Sauerstoffkonzentration von 50 Vol-% ($X_{O2}$= 0,5) ergibt sich bei einer Molmasse von Sauerstoff $M_{O2}$= 15,9994 $g\cdot mol^{-1}$ einer Molmasse von Stickstoff $M_{N2}$= 14,0067 $g\cdot mol^{-1}$ und der Gaskonstante R= 8,314 $J\cdot mol^{-1}\cdot K^{-1}$ (8,314 $kg\cdot m^2\cdot s^{-2}\cdot mol^{-1}\cdot\cdot K^{-1}$) für die Gesamtmasse des Gases $m_g$= $m_{O2}$+$m_{N2}$ im Kathodengaskreislauf 11 zu einem stabilen Zeitpunkt vor dem kontinuierlichen Betrieb der Brennstoffzellen, d.h. vor dem Beginn der Stromentnahme, ohne gasförmigen oder flüssigen Wasseranteil:

$$m_g=[M_{O2}\cdot\chi_{O2}+M_{N2}(1-\chi_{O2})]\cdot\frac{p_g\cdot V_g}{R\cdot T_g}$$

Durch Einsetzen der obigen Zahlenwerte ergibt sich für die erforderliche Gesamtmasse des Gases im Kathodengaskreislauf 11 $m_g$ = 9,170g. Unter Berücksichtigung des Verhältnisses der Molmassen von Sauerstoff und Stickstoff $M_{O2}/M_{N2}$ = 15,9994 : 14,0067 ergibt sich für die Masse von Sauerstoff $m_{O2}$ = 4,585g und für die Masse von Stickstoff $m_{N2}$ = 4,281g.

Wenn das Befüllen mit Stickstoff bei 23°C (296K) erfolgt, muss ein Stickstoffpartialdruck $p_{N2}$ eingestellt werden, der sich ergibt aus:

$$p_{N2}=\frac{m_{N2}\cdot R\cdot 296\,K}{M_{N2}\cdot V_g}=2149\text{ hPa (absolut).}$$

Dieser Partialdruck wird bei der Inbetriebnahme des Brennstoffzellensystems im Kathodengaskreislauf 11 und im Anodengaskreislauf 21 eingestellt.

Die obige Berechnung lässt allerdings unberücksichtigt, dass bei der Brennstoffzellenreaktion Wasser als Reaktionsprodukt entsteht, das zu einem gewissen Anteil in Gasform im Kathodengaskreislauf und im Anodengaskreislauf mitgeführt wird. Das gasförmige Wasser ersetzt einen Teil des Inertgases, so dass bei der Inbetriebnahme des Brennstoffzellensystems entsprechend weniger Inertgas in den Kathodengaskreislauf 11 und in den Anodengaskreislauf 21 eingespeist werden muss. Die benötigte Menge an Inertgas unter Berücksichtigung des gebildeten Reaktionswassers kann berechnet werden nach der Wagner-Gleichung

$$p_{sat}=p_c\cdot\exp\left\{\frac{T_c}{T_g}\cdot[A\cdot(1-\frac{T_g}{T_c})+B\cdot(1-\frac{T_g}{T_c})^{1.5}+C\cdot(1-\frac{T_g}{T_c})^3+D\cdot(1-\frac{T_g}{T_c})^6]\right\}$$

$p_{sat}$ bezeichnet den Sättigungsdruck, $p_c$ den kritischen Gasdruck und $T_c$ die kritische Temperatur von Wasser. $p_c$ beträgt 220600 hPa und $T_c$ beträgt 647,1 K. $T_g$ bezeichnet die Temperatur des Gases im Kathodengaskreislauf bzw. im Anodengaskreislauf, und A, B, C, D sind Wagner-Koeffizienten (A = -7,71374, B = 1,31467, C = -2,51444, D = -1,72542). Hinsichtlich der Wagner-Gleichung und der oben genannten Werte wird verwiesen auf den VDI-Wärmeatlas, 10. Auflage, Springer-Verlag Berlin, Heidelberg 2006.

Durch Einsetzen der Parameter erhält man für die Konzentration $X_{H2O}$ von gasförmigem Wasser im Kathodengaskreislauf und im Anodengaskreislauf $X_{H2O}$ = $p_{sat}/p_g$ = 0,249.

$p_g$ bezeichnet den Solldruck des Kathodenbetriebsgases bzw. Anodenbetriebsgases (4451 hPa absolut).

Für die Gesamtmasse des Gases $m_g$ = $m_{O2}$ + $m_{N2}$ + $m_{H2O}$ im Kathodengaskreislauf 11 zu einem stabilen Zeitpunkt während des Betriebs der Brennstoffzelle ergibt sich somit

$$m_g=[M_{02}\cdot\chi_{O2}+M_{N2}\cdot(1-\chi_{O2}-\chi_{H2O})+M_{H2O}\cdot\chi_{H2O}]\cdot\frac{p_g\cdot V_g}{R\cdot T_g}$$

$V_g$, $T_g$ und $\chi_{O2}$ sind wie vorstehend bei der Berechnung ohne gasförmigen Wasseranteil angegeben.

Durch Einsetzen der Parameter ergibt sich für die Masse von Sauerstoff $m_{O2}$ = 4,585g, für die Masse von Stickstoff $m_{N2}$ = 2,018g und für die Masse von gasförmigem Wasser $m_{H2O}$ = 2,567g. Die Gesamtmasse $m_g$ des Gases

beträgt 9,170g.

Bei der Befüllung des Anodengaskreislaufs und des Kathodengaskreislaufs mit Stickstoff bei der Inbetriebnahme des Brennstoffzellensystems, wenn die Temperatur $T_0$ 296K beträgt, muss ein Stickstoffdruck eingestellt werden, der sich ergibt

$$\text{aus } p_{N2} = \frac{m_{N2} \cdot R \cdot T_0}{M_{N2} \cdot V_g}$$

Es ergibt sich ein Stickstoffdruck $p_{N2}$ von 1013 hPa absolut.

Bei Inbetriebnahme des Brennstoffzellensystems 1 und vor Inbetriebnahme der Brennstoffzellenanordnung 2 wird im Kathodengaskreislauf und im Anodengaskreislauf im Wesentlichen gleichzeitig ein Stickstoffpartialdruck von 1013 hPa eingestellt. Der Stickstoffpartialdruck von 1013 hPa in dem Kathodengaskreislauf 11 wird eingestellt durch Öffnen des Ventils 55 in dem Inertgasströmungsweg 51, wobei Stickstoff zu dem 3-2-Wege-Ventil 32 strömt, das zwischen einer Zuführung von Sauerstoff und Stickstoff umschaltbar ist. Das Ventil 32 wird auf Stickstoffversorgung geschaltet, sodass Stickstoff durch einen Strömungsweg 34 an der Übergangstelle 15 in den Kathodengaskreislauf 11 einströmt. Der Stickstoffdruck wird mittels des Drucksensors 18 gemessen, und der Druckminderer 53 im Inertgasströmungsweg 51 vergleicht den gemessenen Druck mit der Sollvorgabe von 1013 hPa und lässt so lange Stickstoff nachströmen, bis ein Stickstoffdruck von 1013 hPa erreicht ist (die Drücke bezeichnen jeweils Absolutdrücke).

Im Wesentlichen gleichzeitig mit der Befüllung des Kathodengaskreislaufs 11 wird der Anodengaskreislauf 21 mit Stickstoff befüllt. Eine im Wesentlichen gleichzeitige Befüllung mit demselben Stickstoffdruck wie im Kathodengaskreislauf ist notwendig, um eine Migration von Stickstoff durch Partialdruckausgleich zu verhindern. Zur Befüllung des Anodengaskreislaufs 21 mit Stickstoff wird das 3-2-WegeVentil 42, das zwischen einer Zuführung von Wasserstoff und Stickstoff umschaltbar ist, auf Stickstoffversorgung geschaltet, sodass Stickstoff durch einen Stickstoffströmungsweg 44 zu der Übergangsstelle 25 und in den Anodengaskreislauf 21 einströmt. Der Stickstoffdruck in dem Anodengaskreislauf 21 wird mittels des Drucksensors 28 gemessen. Der Druckminderer 55 vergleicht den gemessenen Druck mit dem einzustellenden Solldruck von 1013 hPa und lässt solange Stickstoff nachströmen, bis dieser Druck erreicht ist.

Anschließend werden die Betriebsgasgemische hergestellt. Zu diesem Zweck wird das Ventil 32 auf Sauerstoffversorgung geschaltet und das Ventil 42 auf Wasserstoffversorgung geschaltet. Da in dem Ausführungsbeispiel das Kathodenbetriebsgas einen Sauerstoffanteil von 50 Vol.-% aufweist, ist der einzustellende Sauerstoffpartialdruck $p_{O2}$ gleich dem Stickstoffpartialdruck $p_{N2}$ ohne Berücksichtigung des Reaktionswassers, also 2149 hPa. Damit ergibt sich für den Gesamtbetriebsgasdruck. $p_g$ bei der Befüllungstemperatur von 23°C ein einzustellender Druck von 4156 hPa. Dieser Druck wird in dem Kathodengaskreislauf 11 in analoger Weise eingestellt wie der Stickstoffpartialdruck, das heißt der Druck $p_g$ wird mittels des Drucksensors 18 gemessen, und der Druckminderer 33 vergleicht den gemessenen Druck mit der Sollwertvorgabe. Solange der gemessene Druck kleiner ist als die Sollwertvorgabe von 4156 hPa wird das Druckmindererventil so weit geöffnet, dass ausreichend Sauerstoff in den Kathodengaskreislauf einströmt, um die Sollwertvorgabe zu erreichen. Sobald der von dem Drucksensor gemessene Druck die Sollwertvorgabe erreicht hat, schließt das Ventil des Druckminderers 33. Gleichzeitig wird in dem Anodengaskreislauf 21 ein Gasdruck $p_g = {}_{PH2} + p_{N2}$ von ebenfalls 4156 hPa eingestellt, indem der Druck $p_g$ in dem Anodengaskreislauf 21 mittels des Drucksensors 28 gemessen wird und der gemessene Druck von dem Druckminderer 43 mit der Sollwertvorgabe verglichen wird. Das Ventil des Druckminderers 43 wird zur Einströmung von Wasserstoff in den Anodengaskreislauf 21 so lange geöffnet bis die Sollwertvorgabe erreicht ist. Dann wird das Druckmindererventil geschlossen. Die Ventile 32 und 42 behalten ihre Stellung bei, das heißt sie bleiben auf die Durchströmung mit Sauerstoff beziehungsweise mit Wasserstoff gestellt. Das Brennstoffzellensystem 1 ist nun bereit für die Inbetriebnahme der Brennstoffzellenanordnung 2. Die Drücke bedeuten jeweils Absolutdrücke.

Das vorstehende Beispiel wurde so gewählt, dass der einzustellende Stickstoffpartialdruck etwa dem Atmosphärendruck entspricht, so dass sich durch einfaches Spülen des Kathodengaskreislaufs und des Anodengaskreislaufs mit Stickstoff der passende Stickstoffpartialdruck einstellt. Dabei ergeben sich unter Betriebsbedingungen jedoch Betriebsgasdrücke, die oberhalb des bei der vorliegenden Erfindung bevorzugten Bereichs von 300 bis 1000 hPa (Überdruck) liegen. Zur Einstellung von Betriebsgasdrücken in dem bevorzugten Bereich müssen Stickstoffpartialdrücke (Absolutdrücke) eingestellt werden, die geringer sind als der atmosphärische Druck, d.h. der Kathodengaskreislauf und der Anodengaskreislauf müssen vor der Einstellung der gewünschten Inertgasdrücke evakuiert werden. Zu diesem Zweck sind in dem Kathodengaskreislauf und dem Anodengaskreislauf bevorzugt jeweils eine Einrichtung zur Erzeugung eines Unterdrucks, wie eine Vakuumpumpe, vorgesehen (in den Figuren nicht dargestellt). Kleine leichte Pumpen mit geringer Saugleistung sind ausreichend, da kein hohes Vakuum erzeugt werden muss. Es genügt, wenn der einzustellende Stickstoffpartialdruck (z.B. etwa 200 bis 800 hPa absolut) erzeugt werden kann oder ein Druck geringfügig unterhalb des einzustellenden Stickstoffpartialdrucks, so dass durch Zuführung von Stickstoff, wie oben beschrieben, der gewünschte Stickstoffpartialdruck (Soll-Stickstoffpartialdruck) eingestellt werden kann.

Vor der Aufnahme des Betriebs der Brennstoffzellenanordnung 2, und bevorzugt bereits während des Befüllens des Kathodengaskreislaufs 11 und des Anodengaskreislaufs 21, wird in dem Kathodengaskreislauf und dem Anodengaskreislauf jeweils eine rezirkulierende Strömung erzeugt, um eine gute Gasverteilung und Durchmischung von Inertgas und Reaktionsgas zu erzielen, beispielsweise mittels einer Rezirkulationspumpe 17 in dem Kathodenabgasströmungsweg 14 beziehungsweise mittels einer Rezirkulationspumpe 27 in dem Anodenabgasströmungsweg 24. Alternativ kann eine oder können beide Pumpen durch eine Strahldüse ersetzt werden. Die Aufrechterhaltung einer Strömungsgeschwindigkeit ist wichtig, um zu gewährleisten, dass ständig frische Betriebsgase in die Brennstoffzellen hinein transportiert und verbrauchte Gase und bei der Brennstoffzellenreaktion gebildetes Wasser aus den Brennstoffzellen abtransportiert werden.

Das bei der Brennstoffzellenreaktion gebildete Wasser muss aus dem Brennstoffzellenabgas entfernt werden, da es sich ansonsten in dem Kathodengaskreislauf und in dem Anodengaskreislauf immer mehr anreichern und schließlich die Brennstoffzellen fluten würde. Daher ist in dem Kathodenabgasströmungsweg 14 ein Wasserabscheider 16 vorgesehen, und in dem Anodenabgasströmungsweg 24 ist ein Wasserabscheider 26 vorgesehen. In den Wasserabscheidern 16, 26 wird das flüssige Wasser vom Gasstrom abgetrennt und aufgefangen, während gasförmiges Wasser in dem Kathodenabgas und dem Anodenabgas verbleibt. Nach dem Abtrennen des flüssigen Wassers wird das Kathodenabgas vollständig in den Kathodenbetriebsgasströmungsweg 12 eingespeist, und das Anodenabgas wird vollständig in den Anodenbetriebsgasströmungsweg 22 eingespeist. Bedingt durch die Einspeisung der Brennstoffzellenabgase in die Betriebsgasströmungswege während des Betriebs der Brennstoffzellanordnung 2 verarmen die Betriebsgase an den Reaktionsgasen Sauerstoff beziehungsweise Wasserstoff, weshalb der von den Drucksensoren 18 und 28 gemessene Druck niedriger ist als der Solldruck bei der jeweiligen Gastemperatur, gemessen mittels der Temperatursensoren 19 und/oder 29 in dem Kathodenabgasströmungsweg 14 und/oder dem Anodenabgasströmungsweg 24. Erfindungsgemäß wird jedoch dafür gesorgt, dass während des Betriebs der Brennstoffzellanordnung 2 der Druck in dem Kathodengaskreislauf 11 und dem Anodengaskreislauf 21 konstant gehalten wird. Zu diesem Zweck ist eine Einrichtung zur Zuführung von Sauerstoff zu dem Kathodengaskreislauf 11 und eine Einrichtung zur Zuführung von Wasserstoff zu dem Anodengaskreislauf 21 vorgesehen, womit jeweils regelbare Sauerstoff- und Wasserstoffmengen zugeführt werden können. In der dargestellten Ausführungsform werden ein Druckminderer 33 und ein Druckminderer 43 verwendet. Der Druck in dem Kathodengaskreislauf 11 und dem Anodengaskreislauf 21 wird konstant gehalten, indem das Ventil des Druckminderers 33 und das Ventil des Druckminderers 43 so weit öffnet, dass kontinuierlich oder regelmäßig Sauerstoff beziehungsweise Wasserstoff in den Kathodengaskreislauf 11 beziehungsweise den Anodengaskreislauf 21 einströmt, um den verbrauchten Sauerstoff beziehungsweise den verbrauchten Wasserstoff zu ergänzen.

Als alternative Einrichtungen zur bedarfsgerechten Zuführung von Sauerstoff, Wasserstoff und Stickstoff können auch Massendurchflussregler verwendet werden.

In der dargestellten Ausführungsform sind die Wasserabscheider 16 und 26 jeweils mit einem Füllstandsschalter 67 beziehungsweise 68 und mit einem Wasserablassventil 64 beziehungsweise 65 ausgestattet. Die Füllstandsschalter 67, 68 überwachen den Füllstand der Wasserabscheider 16, 26 und sorgen dafür, dass ein vorgegebener Füllstand nicht überschritten wird. Sobald der Wasserpegel in den Wasserabscheidern 16, 26 so weit gestiegen ist, dass die Füllstandsschalter benetzt werden, werden die Wasserablassventile 64, 65 geöffnet und Wasser abgelassen. Die Ablasszeit wird so gewählt, dass noch etwas Wasser in den Wasserabscheidern 16, 26 zurückbleibt, um ein Ausströmen von Kathodenabgas beziehungsweise Anodenabgas zu verhindern. Geeignete Ablasszeiten liegen im Bereich von 1 bis 3 Sekunden. Das abgelassene Wasser strömt durch Leitungen 62, 63 in einen Wassersammeltank 60, unterstützt durch eine Wasserpumpe 61, die jeweils betrieben wird, wenn eines der Wasserablassventile 64, 65 oder beide geöffnet sind.

Die dargestellte Ausführungsform weist in dem Kathodenbetriebsgasströmungsweg 12 einen Druckschalter 4 und in dem Anodenbetriebsgasströmungsweg 22 einen Druckschalter 6 auf. Diese Druckschalter überwachen den Druck der Betriebsgase und schalten bei Überschreiten eines vorbestimmten Maximaldrucks des Kathodenbetriebsgases bzw. des Anodenbetriebsgases das gesamte System über eine Sicherheitsschaltung in einen sicheren Zustand, wie vorstehend beschrieben wurde.

In den Stickstoffströmungswegen 52 und 54 sind Rückschlagventile 56, 57 vorgesehen. Das Rückschlagventil 56 verhindert einen Rückstrom des Kathodenbetriebsgases, falls das Ventil 32 während des Betriebs der Brennstoffzellenanordnung 2 fehlerhafterweise auf eine Durchströmung mit Stickstoff geschaltet werden sollte, und das Rückschlagventil 57 verhindert einen Rückstrom des Anodenbetriebsgases, falls während des Betriebs der Brennstoffzellenanordnung 2 das Ventil 42 fehlerhafterweise auf eine Durchströmung mit Stickstoff geschaltet werden sollte.

Eine weitere Ausführungsform eines erfindungsgemäßen abgeschlossenen Brennstoffzellensystems 1 ist in Fig. 2 schematisch dargestellt. Das Brennstoffzellensystem gemäß der in Fig. 2 dargestellten Ausführungsform ist hinsichtlich der meisten Komponenten identisch mit dem in Fig. 1 dargestellten Brennstoffzellensystem. Gleiche Bezugsziffern bezeichnen gleiche bzw. einander entsprechende Komponenten. Das in Fig. 2 dargestellte Brennstoffzellensystem weist nur einen Temperatursensor 19 im Kathodengaskreislauf 11 auf. Ein zuschaltbarer Bleedingwiderstand 9 sorgt für die Erzeugung von Brennstoffzellenleistung, und damit den Verbrauch von Reaktionsgasen, nach dem Abschalten des Brennstoffzellensystems. Außerdem sind in der in Fig. 2 dargestellten Ausführungsform als Einrichtungen zum Erzeugen einer Strömung in dem Kathodengaskreislauf 11 und dem Anodengaskreislauf 21 Venturidüsen 17 und 27 an der Übergangsstelle 15 des Kathodengaskreislaufs und der Übergangsstelle 25 des Anodengaskreislaufs vorgesehen. Durch das aus den Leitungen 34 bzw. 44 in die Venturidüsen einströmende Gas wird jeweils das Abgas aus den Leitungen 14 und 24 angesaugt und in den Kathodenbetriebsgasströmungsweg 12 bzw. den Anodenbetriebsgasströmungsweg 22 eingespeist.

Darüber hinaus weist das in Fig. 2 dargestellte Brennstoffzellensystem ein Ventil 5 zum Entlassen von Gas aus dem Kathodengaskreislauf 11 und ein Ventil 7 zum Entlassen von Gas aus dem Anodengaskreislauf 21 auf. Nach dem Abschalten des Brennstoffzellensystems, oder zumindest vor einer erneuten Inbetriebnahme des Brennstoffzellensystems, sollten die noch im System befindlichen Gase und das im System befindliche Wasser abgelassen werden. Dies kann beispielsweise durch das Ventil 5 im Kathodenabgasströmungsweg 14 und das Ventil 7 im Anodenabgasströmungsweg 24, sowie ein Wasserablassventil 66 geschehen. Das Ablassen der Gase und des Wassers erfolgt in die Umgebung des Brennstoffzellensystems bzw. bei in ein Verbrauchersystem eingebauten Brennstoffzellensystemen in die Umgebung des Verbrauchersystems, in das das Brennstoffzellensystem eingebaut ist, d. h. in die Atmosphäre, jedoch erst nach Beendigung der von dem Verbrauchersystem auszuführenden Mission. Während einer laufenden Mission hingegen stellt das Verbrauchersystem ein völlig abgeschlossenes System dar, was insbesondere bei Fahrzeugen wie Unterwasserfahrzeugen von essentieller Bedeutung ist. Das Ablassen der Gase aus den Gaskreisläufen nach Beendigung der von dem Verbrauchersystem auszuführenden Mission kann jedoch auch auf andere Weise als mittels der Ventile 5, 7 geschehen, beispielsweise gemeinsam mit dem gesammelten Wasser in den Wasserabscheidern 16, 26 durch deren Ablassöffnungen.

Eine weitere Ausführungsform eines erfindungsgemäßen Brennstoffzellensystems 1 ist in Fig. 3 schematisch dargestellt. Die in Fig. 3 dargestellte Ausführungsform ist ein halbgeschlossenes System, d. h. das System ist nur anodenseitig geschlossen, während kathodenseitig Luft aus der Umgebung entnommen wird und nach erfolgter Brennstoffzellenreaktion die an Sauerstoff verarmte Luft wieder an die Umgebung abgegeben wird. Das Brennstoffzellensystem gemäß der in Fig. 3 dargestellten Ausführungsform ist anodenseitig identisch mit dem in Fig. 2 dargestellten Brennstoffzellensystem. Gleiche Bezugsziffern bezeichnen gleiche bzw. einander entsprechende Komponenten.

Das Brennstoffzellensystem 1 gemäß Fig. 3 weist einen Kathodengasströmungsweg 11’ auf, der einen Kathodenbetriebsgasströmungsweg 12 , einen Kathodenströmungsbereich 13 und einen Kathodenabgasströmungsweg 14 umfasst. Der Kathodenbetriebsgasströmungsweg 12 und der Kathodenabgasströmungsweg 14 sind fluidmäßig voneinander getrennt. Über eine Luftquelle 30’ wird Luft als Kathodenbetriebsgas, bevorzugt natürliche Umgebungsluft, in den Kathodengas-strömungsweg 11’ eingespeist. Eine bevorzugte Luftquelle ist ein Gebläse mit einer Leistung, die eine ausreichende Strömungsgeschwindigkeit des Kathodenbetriebsgases in dem Kathodengasströmungsweg 11’ sicherstellt.

In dem Kathodengasströmungsweg 11’ befinden sich außerdem ein Sensor 35 zur Erfassung der Sauerstoffkonzentration bzw. des Stickstoffanteils in dem zugeführten Kathodenbetriebsgas, ein Drucksensor 18, ein Temperatursensor 19, und ein Druckschalter 4. Die Sensoren 35, 18 und 19 sowie der Druckschalter 4 sind optionale Komponenten. Ebenfalls optional ist das in Fig. 3 dargestellte Sperrventil 32’, das es erlaubt, den Kathodengasströmungsweg 11’ von der Luftquelle 30’ zu trennen. Die Luftquelle 30’ und das Ventil 32’ werden durch einen Luftströmungsweg 31’ verbunden.

Von der Luftquelle 30’ gelieferte Luft strömt in den Kathodenbetriebsgasströmungsweg 12 ein, durchströmt den Kathodenströmungsbereich 13, und verlässt schließlich die Brennstoffzellenanordnung als an Sauerstoff verarmtes Kathodenabgas durch den Kathodenabgasströmungsweg 14. Der Kathodenabgasströmungsweg 14 entlässt das Kathodenabgas in die Umgebung. Eine Einrichtung, die dem Ausströmen des Kathodenabgases einen gewissen Widerstand entgegensetzt und gleichzeitig ein etwaiges Strömen von Gas in der Gegenrichtung verhindert, wie beispielsweise ein federbelastetes Rückschlagventil oder eine Drosselklappe, befindet sich in dem Kathodenabgasströmungsweg 14. Die Einrichtung 5’ gewährleistet die Aufrechterhaltung des gewünschten Kathodenbetriebsgasdrucks während des Betriebs des Brennstoffzellensystems 1.

Vor der Inbetriebnahme des Brennstoffzellensystems gemäß Fig. 3 wird zunächst mittels der Luftquelle 30’ Umgebungsluft in den Kathodenbetriebsgasströmungsweg 12 einströmen lassen und zeitgleich Stickstoff aus der Stickstoffquelle 50 in den Anodenbetriebsgasströmungsweg 22 einströmen lassen (ggf. nach vorausgehendem Evakuieren des Anodengaskreislaufs 21), wobei ein Stickstoffpartialdruck eingestellt wird, der dem Stickstoffpartialdruck der Luft in dem Kathodenbetriebsgasströmungsweg 12 entspricht. Die Einstellung des erforderlichen Stickstoffpartialdrucks in dem Anodengaskreislauf 21 erfolgt in der gleichen Weise, wie es vorstehend für die abgeschlossenen Systeme beschrieben wurde. Anschließend wird aus der Wasserstoffquelle 40 Wasserstoff in den Anodenbetriebsgasströmungsweg 22 eingespeist, bis in dem Anodengaskreislauf 21 und in Kathodengasströmungsweg 11’ der selbe Druck herrschen. Dabei wird anodenseitig wiederum vorgegangen, wie es vorstehend für die abgeschlossenen Systeme beschrieben wurde. Natürlich ist auch hier zu berücksichtigen, dass sich beim Betrieb des Brennstoffzellensystems die Temperatur ändert, sowie Produktwasser gebildet wird. Anodenseitig muss das Produktwasser aus dem Anodenabgas abgetrennt und in

einem Sammelbehälter aufgefangen werden, wie es vorstehend beschrieben wurde. Eine Abtrennung von Produktwasser aus dem Kathodenabgas ist optional. Alternativ kann das Produktwasser auch zusammen mit dem Kathodenabgas in die Umgebung entlassen werden.

Ein abgeschlossenes Brennstoffzellensystem kann mit leichten Modifizierungen auch als anodenseitig geschlossenes oder kathodenseitig geschlossenes System betrieben werden. Soll beispielsweise das in Fig. 2 dargestellte, sowohl anodenseitig als auch kathodenseitig abgeschlossene System als anodenseitig geschlossenes, kathodenseitig aber offenes System betrieben werden, muss zwischen dem Kathodenbetriebsgasströmungsweg 12 und dem Kathodenabgasströmungsweg 14, d. h. zwischen dem Wasserabscheider 16 und der Venturidüse 17, eine Möglichkeit vorgesehen werden, den Kathodenbetriebsgasströmungsweg 12 von dem Kathodenabgasströmungsweg 14 zu trennen. Dies kann beispielsweise durch ein einfaches Absperrventil, wie es die Ventile 5 oder 55 sind, geschehen. Das Ventil 5 zum Entlassen von Gas aus dem Kathodengaskreislauf 11 ist durch die Einrichtung 5' aus Fig. 3 zu ersetzen oder es ist zusätzlich eine derartige Einrichtung 5' in dem Kathodenabgasentlassungsweg vorzusehen. Mittels einer Verbindungsstelle in dem Sauerstoff-Strömungsweg 31 zwischen dem Druckminderer 33 und dem 3-2-Wegeventil 32 kann die Sauerstoffquelle 30 abgekoppelt und durch eine Luftquelle 30' ersetzt werden. Das in Fig. 2 dargestellte Brennstoffzellensystem ist dann bereit für einen Betrieb als ein nur anodenseitig abgeschlossenes System. In analoger Weise kann durch anodenseitige Modifizierung ein kathodenseitig geschlossenes, anodenseitig aber offenes System erhalten werden.

## Patentansprüche

**1.** Brennstoffzellensystem (1), das geeignet ist zum Betreiben mit einem Sauer - stoff und Inertgas enthaltenden Kathodenbetriebsgas und einem Wasserstoff und Inertgas enthaltenden Anodenbetriebsgas, aufweisend

- eine Brennstoffzellenanordnung (2) mit mindestens einer Brennstoffzelle (3), wobei die Brennstoffzelle eine Kathode (10) mit einem Kathodenströ - mungsbereich (13) und eine Anode (20) mit einem Anodenströmungsbe - reich (23) aufweist,
- eine Sauerstoffquelle (30), eine Wasserstoffquelle (40) und eine Inertgas - quelle (50),
- einen Kathodengaskreislauf (11), der einen Kathodenbetriebsgasströ - mungsweg (12) zum Einspeisen des Kathodenbetriebsgases in den Ka - thodenströmungsbereich (13) der Kathode (10), den Kathodenströmungs - bereich (13), einen Kathodenabgasströmungsweg (14) zur Aufnahme von Kathodenabgas aus dem Kathodenströmungsbereich und zum Rezirku - lieren des Kathodenabgases in den Kathodenbetriebsgasströmungsweg (12), und eine Übergangsstelle (15), an der der Kathodenabgasströ - mungsweg (14) in den Kathodenbetriebsgasströmungsweg (12) übergeht, umfasst,
- einen Anodengaskreislauf (21), der einen Anodenbetriebsgasströmungs - weg (22) zum Einspeisen des Anodenbetriebsgases in den Anodenströ - mungsbereich (23) der Anode (20), den Anodenströmungsbereich (23), einen Anodenabgasströmungsweg (24) zur Aufnahme von Anodenabgas aus dem Anodenströmungsbereich (23) und zum Rezirkulieren des An - odenabgases in den Anodenbetriebsgasströmungsweg (22), und eine Übergangsstelle (25), an der der Anodenabgasströmungsweg (24) in den Anodenbetriebsgasströmungsweg (22) übergeht, umfasst,
- eine Einrichtung (16) zum Abtrennen von flüssigem Wasser aus dem Ka - thodenabgas in dem Kathodenabgasströmungsweg (14) und eine Ein - richtung (26) zum Abtrennen von flüssigem Wasser aus dem Anodenab - gas in dem Anodenabgasströmungsweg (24),
- eine Einrichtung (17) zum Erzeugen einer Strömung in dem Kathoden - gaskreislauf (11) und eine Einrichtung (27) zum Erzeugen einer Strömung in dem Anodengaskreislauf (21), wobei die Einrichtung (17) und/oder die Einrichtung (27) bevorzugt eine Pumpe oder eine Strahldüse ist,
- einen Drucksensor (18) in dem Kathodengaskreislauf (11), einen Druck - sensor (28) in dem Anodengaskreislauf (21), einen Temperatursensor (19) in dem Kathodengaskreislauf (11) und optional einen Temperatursen - sor (29) in dem Anodengaskreislauf (21) zur Ermittlung einer Ist-Menge eines Gases in dem Kathodengaskreislauf (11) und zur Ermittlung einer Ist-Menge eines Gases in dem Anodengaskreislauf (21),
- einen Inertgasströmungsweg (51, 52) von der Inertgasquelle (50) zu der Übergangsstelle (15) in dem Kathodengaskreislauf (11) oder zu einer Stelle stromauf von der Übergangsstelle (15), und einen Inertgasströ - mungsweg (51, 54) von der Inertgasquelle (50) zu der Übergangsstelle (25) in dem Anodengaskreislauf (21) oder zu einer Stelle stromauf von der Übergangsstelle (25),
- einen Sauerstoffströmungsweg (31) von der Sauerstoffquelle (30) zu der Übergangsstelle (15) in dem Kathodengaskreislauf (11), und einen Was - serstoffströmungsweg (41) von der Wasserstoffquelle (40) zu der Übergangsstelle (25) in dem Anodengaskreislauf (21),
- eine Einrichtung zur Zuführung von Inertgas zu dem Kathodengaskreis - lauf (11) und zu dem Anodengaskreislauf (21) bis zum Erreichen einer Soll-Menge an Inertgas in dem Kathodengaskreislauf (11) und dem An - odengaskreislauf (21),
- eine Einrichtung zur Zuführung von Sauerstoff zu dem Kathodengaskreis - lauf (11) bis zum Erreichen einer Soll-Menge an Sauerstoff in dem Katho - dengaskreislauf (11), und
- eine Einrichtung zur Zuführung von Wasserstoff zu dem Anodengaskreis - lauf (21) bis zum Erreichen einer Soll-Menge an Wasserstoff in dem An - odengaskreislauf (21),
- wobei in dem Brennstoffzellensystem (1) keine Möglichkeit besteht, wäh - rend des Betriebs der mindestens einen Brennstoffzelle (3) Material aus der Umgebung aufzunehmen oder an sie abzugeben oder Brennstoffzel - lenabgas zu speichern, abgesehen vom Speichern von Wasser in flüssi - ger Form.

**2.** Brennstoffzellensystem (1) nach Anspruch 1, außerdem aufweisend eine Ein - richtung zum Einspeisen von entweder Sauerstoff aus dem Sauerstoffströ - mungsweg (31) oder von Inertgas aus dem Inertgasströmungsweg (51, 52) in den Kathodengaskreislauf (11) an der Übergangsstelle (15) des Kathoden - gaskreislaufs (11), und/oder eine Einrichtung zum Einspeisen von entweder Wasserstoff aus dem Wasserstoffströmungsweg (41) oder von Inertgas aus dem Inertgasströmungsweg (51, 54) in den Anodengaskreislauf (21) an der Übergangsstelle (25) des Anodengaskreislaufs (21).

**3.** Brennstoffzellensystem (1) nach Anspruch 1 oder 2, bei dem die Einrichtung zur Zuführung von Inertgas zu dem Kathodengaskreislauf (11) und zu dem Anodengaskreislauf (21) ein Druckminderer (53) in dem Inertgasströmungsweg (51) ist und/oder die Einrichtung zur Zuführung von Sauerstoff zu dem Kathodengaskreislauf ein Druckminderer (33) in dem Sauerstoffströmungs - weg (31) ist und/oder die Einrichtung zur Zuführung von Wasserstoff zu dem Anodengaskreislauf (21) ein Druckminderer (43) in dem Wasserstoffströmungsweg (41) ist.

**4.** Brennstoffzellensystem (1) nach einem der Ansprüche 1 bis 3, außerdem auf - weisend mindestens einen Behälter (60) zum Speichern von flüssigem Was - ser, der fluidmäßig mit der Einrichtung (16) zum Abtrennen von flüssigem Wasser und/oder mit der Einrichtung (26) zum Abtrennen von flüssigem Was - ser, bevorzugt über eine Wasserpumpe (61), verbunden ist.

**5.** Brennstoffzellensystem (1) nach einem der Ansprüche 1 bis 4, außerdem auf - weisend eine Einrichtung (5) zum Entlassen von Gas aus dem Kathodenab - gasströmungsweg (14) und/oder eine Einrichtung (7) zum Entlassen von Gas aus dem Anodenabgasströmungsweg (24).

**6.** Brennstoffzellensystem (1) nach einem der Ansprüche 1 bis 5, außerdem auf - weisend eine Einrichtung zur Erzeugung eines Unterdrucks in dem Kathoden - gaskreislauf (11) und/oder eine Einrichtung zur Erzeugung eines Unterdrucks in dem Anodengaskreislauf (21).

**7.** Brennstoffzellensystem (1), das geeignet ist zum Betreiben mit Luft als Katho - denbetriebsgas und einem Wasserstoff und Stickstoff enthaltenden Anoden - betriebsgas, aufweisend

- eine Brennstoffzellenanordnung (2) mit mindestens einer Brennstoffzelle (3), wobei die Brennstoffzelle eine Kathode (10) mit einem Kathodenströ - mungsbereich (13) und eine Anode (20) mit einem Anodenströmungsbe - reich (23) aufweist,
- eine Luftquelle (30’), eine Wasserstoffquelle (40) und eine Stickstoffquelle (50),
- einen Kathodengasströmungsweg (11’), der einen Kathodenbetriebsgass - trömungsweg (12) zum Einspeisen des Kathodenbetriebsgases in den Kathodenströmungsbereich (13) der Kathode (10), den Kathodenströ - mungsbereich (13), und einen Kathodenabgasströmungsweg (14) zur Aufnahme von Kathodenabgas aus dem Kathodenströmungsbereich um - fasst,
- einen Anodengaskreislauf (21), der einen Anodenbetriebsgasströmungs - weg (22) zum Einspeisen des Anodenbetriebsgases in den Anodenströ - mungsbereich (23) der Anode (20), den Anodenströmungsbereich (23), einen Anodenabgasströmungsweg (24) zur Aufnahme von Anodenabgas aus dem Anodenströmungsbereich (23) und zum Rezirkulieren des An - odenabgases in den Anodenbetriebsgasströmungsweg (22), und eine Übergangsstelle (25), an der der Anodenabgasströmungsweg (24) in den Anodenbetriebsgasströmungsweg (22) übergeht, umfasst,
- eine Einrichtung (26) zum Abtrennen von flüssigem Wasser aus dem An - odenabgas in dem Anodenabgasströmungsweg (24),
- eine Einrichtung (27) zum Erzeugen einer Strömung in dem Anodengas - kreislauf (21), wobei die Einrichtung (27) bevorzugt eine Pumpe oder eine Strahldüse ist,
- einen Drucksensor (18) in dem Kathodengasströmungsweg (11’), einen Drucksensor (28) in dem Anodengaskreislauf (21), einen Temperatursen - sor (19) in dem Kathodengasströmungsweg (11') und optional einen Tem - peratursensor (29) in dem Anodengaskreislauf (21) zur Ermittlung einer Ist-Menge eines Gases in dem Kathodengasströmungsweg (11') und zur Ermittlung einer Ist-Menge eines Gases in dem Anodengaskreislauf (21),

- einen Stickstoffströmungsweg (51, 54) von der Stickstoffquelle (50) zu der Übergangsstelle (25) in dem Anodengaskreislauf (21) oder zu einer Stelle stromauf von der Übergangsstelle (25),
- einen Wasserstoffströmungsweg (41) von der Wasserstoffquelle (40) zu der Übergangsstelle (25) in dem Anodengaskreislauf (21),
- eine Einrichtung zur Zuführung von Stickstoff zu dem Anodengaskreislauf (21) bis zum Erreichen einer Soll-Menge an Stickstoff in dem Anodengas - kreislauf (21),
- eine Einrichtung zur Zuführung von Wasserstoff zu dem Anodengaskreis - lauf (21) bis zum Erreichen einer Soll-Menge an Wasserstoff in dem An - odengaskreislauf (21), und
- ein Ventil (5') in dem Kathodenabgasströmungsweg (14),
- wobei in dem Brennstoffzellensystem (1) keine Möglichkeit besteht, wäh - rend des Betriebs der mindestens einen Brennstoffzelle (3) Anodenbe - triebsgas aus der Umgebung aufzunehmen oder Anodenabgas an sie ab - zugeben oder zu speichern, abgesehen vom Speichern von Wasser in flüssiger Form.

**8.** Verbrauchersystem, wie bemanntes oder unbemanntes Unterwasserfahr - zeug, das ein Brennstoffzellensystem (1) nach einem der Ansprüche 1 bis 7 aufweist.

**9.** Verfahren zum Betreiben eines Brennstoffzellensystems (1) mit einem Sauer - stoff und Inertgas enthaltenden Kathodenbetriebsgas und einem Wasserstoff und Inertgas enthaltenden Anodenbetriebsgas, wobei das Brennstoffzellen - system (1) aufweist

- eine Brennstoffzellenanordnung (2) mit mindestens einer Brennstoffzelle (3), wobei die Brennstoffzelle eine Kathode (10) mit einem Kathodenströ - mungsbereich (13) und eine Anode (20) mit einem Anodenströmungsbe - reich (23) aufweist,
- einen Kathodengaskreislauf (11), der einen Kathodenbetriebsgasströ - mungsweg (12), den Kathodenströmungsbereich (13), einen Kathoden - abgasströmungsweg (14) und eine Übergangsstelle (15), an der der Ka - thodenabgasströmungsweg (14) in den Kathodenbetriebsgasströmungs - weg (12) übergeht, umfasst, und
- einen Anodengaskreislauf (21), der einen Anodenbetriebsgasströmungs - weg (22), den Anodenströmungsbereich (23), einen Anodenabgasströ - mungsweg (24) und eine Übergangsstelle (25), an der der Anodenabgas - strömungsweg (24) in den Anodenbetriebsgasströmungsweg (22) über - geht, umfasst,

wobei das Verfahren folgende Schritte aufweist:

- Einspeisen eines Sauerstoff und Inertgas enthaltenden Kathodenbe - triebsgases in den Kathodenströmungsbereich (13) der Brennstoffzelle (3), und Einspeisen eines Wasserstoff und Inertgas enthaltenden An - odenbetriebsgases in den Anodenströmungsbereich (23) der Brennstoff - zelle (3), wobei die Sauerstoffkonzentration in dem Kathodenbetriebsgas einen vorgegebenen Soll-Wert aufweist und die Wasserstoffkonzentration in dem Anodenbetriebsgas einen vorgegebenen Soll-Wert aufweist und wobei der Inertgaspartialdruck im Anodenbetriebsgas gleich dem Inertgaspartialdruck im Kathodenbetriebsgas ist,
- Reagierenlassen von Sauerstoff und Wasserstoff in der Brennstoffzelle unter Erzeugung von elektrischer Energie, eines Inertgas und Wasser enthaltenden Kathodenabgases und eines Inertgas und Wasser enthal - tenden Anodenabgases,
- Abtrennen von flüssigem Wasser aus dem Kathodenabgas und aus dem Anodenabgas unter Erzeugung eines Flüssigwasser-freien Kathodenab - gases und eines Flüssigwasser-freien Anodenabgases,
- Einspeisen des gesamten Flüssigwasser-freien Kathodenabgases in den Kathodenbetriebsgasströmungsweg (12) und Einspeisen des gesamten Flüssigwasser-freien Anodenabgases in den Anodenbetriebsgasströ - mungsweg (22),
- Ermitteln eines Ist-Werts der Sauerstoffkonzentration des Gases in dem Kathodenbetriebsgasströmungsweg (12) und Ermitteln eines Ist-Werts der Wasserstoffkonzentration des Gases in dem Anodenbetriebsgasströ - mungsweg (22),
- Einspeisen von Sauerstoff in den Kathodenbetriebsgasströmungsweg (12) bis zum Erreichen des vorgegebenen Soll-Werts der Sauerstoffkon - zentration des Kathodenbetriebsgases, und Einspeisen von Wasserstoff in den Anodenbetriebsgasströmungsweg (22) bis zum Erreichen des vor - gegebenen Soll-Werts der Wasserstoffkonzentration des Anodenbetriebs - gases, und
- Aufrechterhalten einer Gasströmungsgeschwindigkeit in dem Kathoden - gaskreislauf (11) und in dem Anodengaskreislauf (21),
und wobei während des Betriebs der mindestens einen Brennstoffzelle (3) kein Material aus der Umgebung aufgenommen oder an sie abgegeben wird und kein Brennstoffzellenabgas gespeichert wird, abgesehen vom Speichern von Wasser in flüssiger Form.

**10.** Verfahren nach Anspruch 9, bei dem vor der Inbetriebnahme der Brennstoff - zellenanordnung (2) folgende Schritte durchgeführt werden:

- Füllen des Kathodengaskreislaufs (11) und des Anodengaskreislaufs (21), durch Evakuieren und/oder Einspeisen von Inertgas, im Wesentlichen gleichzeitig jeweils mit einer solchen Menge Inertgas, dass beim Einspei - sen von Sauerstoff in den Kathodenbetriebsgasströmungsweg (12) unter den Betriebsbedingungen des Brennstoffzellensystems (1) ein Kathoden - betriebsgas mit dem vorgegebenen Soll-Wert der Sauerstoffkonzentration gebildet wird, und beim Einspeisen von Wasserstoff in den Anodenbe - triebsgasströmungsweg (22) unter den Betriebsbedingungen des Brenn - stoffzellensystems (1) ein Anodenbetriebsgas mit dem vorgegebenen Soll-Wert der Wasserstoffkonzentration gebildet wird,
- Einstellen der Betriebsbedingungen des Brennstoffzellensystems (1),
- Einspeisen von Sauerstoff in den Kathodenbetriebsgasströmungsweg (12) bis zum Erreichen des vorgegebenen Soll-Werts der Sauerstoffkon - zentration des Kathodenbetriebsgases, und im Wesentlichen gleichzeitig
- Einspeisen von Wasserstoff in den Anodenbetriebsgasströmungsweg (22) bis zum Erreichen des vorgegebenen Soll-Werts der Wasserstoff - konzentration des Anodenbetriebsgases.

**11.** Verfahren nach Anspruch 9 oder 10, bei dem die Sauerstoffkonzentration in dem Kathodenbetriebsgasströmungsweg (12) und die Wasserstoffkonzentra - tion in dem Anodenbetriebsgasströmungsweg (22) regelmäßig oder kontinu - ierlich bestimmt werden.

**12.** Verfahren nach einem der Ansprüche 9 bis 11, bei dem als Inertgas Stickstoff verwendet wird.

**13.** Verfahren zum Betreiben eines Brennstoffzellensystems (1) mit Luft als Ka - thodenbetriebsgas und einem Wasserstoff und Stickstoff enthaltenden An - odenbetriebsgas, wobei das Brennstoffzellensystem (1) aufweist

- eine Brennstoffzellenanordnung (2) mit mindestens einer Brennstoffzelle (3), wobei die Brennstoffzelle eine Kathode (10) mit einem Kathodenströ - mungsbereich (13) und eine Anode (20) mit einem Anodenströmungsbe - reich (23) aufweist,
- einen Kathodengasströmungsweg (11'), der einen Kathodenbetriebsgass - trömungsweg (12), den Kathodenströmungsbereich (13) und einen Ka - thodenabgasströmungsweg (14) umfasst, und
- einen Anodengaskreislauf (21), der einen Anodenbetriebsgasströmungs - weg (22), den Anodenströmungsbereich (23), einen Anodenabgasströ - mungsweg (24) und eine Übergangsstelle (25), an der der Anodenabgas - strömungsweg (24) in den Anodenbetriebsgasströmungsweg (22) über - geht, umfasst,

wobei das Verfahren folgende Schritte aufweist:

- Einspeisen von Luft als Kathodenbetriebsgas in den Kathodenströmungs - bereich (13) der Brennstoffzelle (3), wobei die Luft eine Sauerstoffkon - zentration aufweist, und Einspeisen eines Wasserstoff und Stickstoff ent - haltenden Anodenbetriebsgases in den Anodenströmungsbereich (23) der Brennstoffzelle (3), wobei die Wasserstoffkonzentration in dem Anoden - betriebsgas einen vorgegebenen Soll-Wert aufweist, der der Sauerstoff - konzentration in Luft entspricht und wobei der Stickstoffpartialdruck im Anodenbetriebsgas gleich dem Stickstoffpartialdruck im Kathodenbe - triebsgas ist,
- Reagierenlassen von Sauerstoff und Wasserstoff in der Brennstoffzelle unter Erzeugung von elektrischer Energie, eines Stickstoff und Wasser enthaltenden Kathodenabgases und eines Stickstoff und Wasser enthal - tenden Anodenabgases,
- Abtrennen von flüssigem Wasser aus dem Anodenabgas unter Erzeu - gung eines Flüssigwasser-freien Anodenabgases,
- Einspeisen des gesamten Flüssigwasser-freien Anodenabgases in den Anodenbetriebsgasströmungsweg (22),
- Ermitteln eines Ist-Werts der Wasserstoffkonzentration des Gases in dem Anodenbetriebsgasströmungsweg (22),
- optional Ermitteln der Sauerstoffkonzentration der Luft in dem Kathoden - betriebsgasströmungsweg (12),
- Einspeisen von Wasserstoff in den Anodenbetriebsgasströmungsweg (22) bis zum Erreichen des vorgegebenen Soll-Werts der Wasserstoff - konzentration des Anodenbetriebsgases,

- Aufrechterhalten einer Gasströmungsgeschwindigkeit in dem Anodengas - kreislauf (21) und in dem Kathodengasströmungsweg (11'), und
- Entlassen des Kathodenabgases aus dem Kathodenabgasströmungsweg (14),

und wobei während des Betriebs der mindestens einen Brennstoffzelle (3) kein Anodenbetriebsgas aus der Umgebung aufgenommen wird und kein Anodenabgas an die Umgebung abgegeben oder in dem Brennstoffzel - lensystem (1) gespeichert wird, abgesehen vom Speichern von Wasser in flüssiger Form.

**14.** Verfahren nach Anspruch 13, bei dem vor der Inbetriebnahme der Brennstoff - zellenanordnung (2) folgende Schritte durchgeführt werden:

- Einspeisen von Luft in den Kathodengasströmungsweg (11'), und im We - sentlichen gleichzeitig Füllen des Anodengaskreislaufs (21), durch Evaku - ieren und/oder Einspeisen von Stickstoff, mit einer solchen Menge Stick - stoff, dass beim Einspeisen von Wasserstoff in den Anodenbetriebsgass - trömungsweg (22) unter den Betriebsbedingungen des Brennstoffzellen - systems (1) ein Anodenbetriebsgas mit dem vorgegebenen Soll-Wert der Wasserstoffkonzentration gebildet wird, der der Sauerstoffkonzentration in Luft entspricht,
- Einstellen der Betriebsbedingungen des Brennstoffzellensystems (1), und
- Einspeisen von Wasserstoff in den Anodenbetriebsgasströmungsweg (22) bis zum Erreichen des vorgegebenen Soll-Werts der Wasserstoff - konzentration des Anodenbetriebsgases.

**15.** Verfahren nach Anspruch 13 oder 14, bei dem die Wasserstoffkonzentration in dem Anodenbetriebsgasströmungsweg (22) und optional die Sauerstoff - konzentration in dem Kathodenbetriebsgasströmungsweg (12) regelmäßig oder kontinuierlich bestimmt wird.

## Claims

**1.** A fuel cell system (1) suitable for operation with a cathode operating gas containing oxygen and inert gas and an anode operating gas containing hy - drogen and inert gas, comprising:

- a fuel cell arrangement (2) having at least one fuel cell (3), wherein the fuel cell comprises a cathode (10) having a cathode flow region (13) and an anode (20) having an anode flow region (23),
- an oxygen source (30), a hydrogen source (40) and an inert gas source (50),
- a cathode gas circuit (11) comprising a cathode operating gas flow path (12) for feeding the cathode operating gas into the cathode flow region (13) of the cathode (10), the cathode flow region (13), a cathode exhaust gas flow path (14) for receiving cathode exhaust gas from the cathode flow region and for recirculating the cathode exhaust gas into the cathode operating gas flow path (12), and a transition point (15) where the cathode exhaust gas flow path (14) transitions into the cath - ode operating gas flow path (12),
- an anode gas circuit (21) comprising an anode operating gas flow path (22) for feeding the anode operating gas into the anode flow region (23) of the anode (20), the anode flow region (23), an anode exhaust gas flow path (24) for receiving anode exhaust gas from the anode flow re - gion (23) and for recirculating the anode exhaust gas into the anode op - erating gas flow path (22), and a transition point (25) where the anode exhaust gas flow path (24) transitions into the anode operating gas flow path (22),
- a means (16) for separating liquid water from the cathode exhaust gas in the cathode exhaust gas flow path (14) and a means (26) for separating liquid water from the anode exhaust gas in the anode exhaust gas flow path (24),
- a means (17) for generating a flow in the cathode gas circuit (11) and a means (27) for generating a flow in the anode gas circuit (21), wherein the means (17) and/or the means (27) are preferably a pump or a jet nozzle,
- a pressure sensor (18) in the cathode gas circuit (11), a pressure sensor (28) in the anode gas circuit (21), a temperature sensor (19) in the cath - ode gas circuit (11) and optionally a temperature sensor (29) in the an - ode gas circuit (21) for determining an actual amount of a gas in the cathode gas circuit (11) and for determining an actual amount of gas in the anode gas circuit (21),
- an inert gas flow path (51, 52) leading from the inert gas source (50) to the transition point (15) in the cathode gas circuit (11) or to a point up - stream of the transition point (15), and an inert gas flow path (51, 54) leading from the inert gas source (50) to the transition point (25) in the anode gas circuit (21) or to a point upstream of the transition point (25),
- an oxygen flow path (31) leading from the oxygen source (30) to the transition point (15) in the cathode gas circuit (11), and a hydrogen flow path (41) leading from the hydrogen source (40) to the transition point (25) in

the anode gas circuit (21),
- a means for supplying inert gas to the cathode gas circuit (11) and to the anode gas circuit (21) until a nominal amount of inert gas is reached in the cathode gas circuit (11) and the anode gas circuit (21),
- a means for supplying oxygen to the cathode gas circuit (11) until a nominal amount of oxygen is reached in the cathode gas circuit (11), and
- a means for supplying hydrogen to the anode gas circuit (21) until a nominal amount of hydrogen is reached in the anode gas circuit (21),
- wherein there is no possibility in the fuel cell system (1) during operation of the at least one fuel cell (3) of taking in matter from the environment or of releasing matter into the environment or of storing fuel cell exhaust gas, except for storing water in liquid form.

**2.** The fuel cell system (1) according to claim 1,
further comprising a means for feeding either oxygen from the oxygen flow path (31) or inert gas from the inert gas flow path (51, 52) into the cathode gas circuit (11) at the transition point (15) of the cathode gas circuit (11), and/or a means for feeding either hydrogen from the hydrogen flow path (41) or inert gas from the inert gas flow path (51, 54) into the anode gas cir - cuit (21) at the transition point (25) of the anode gas circuit (21).

**3.** The fuel cell system (1) according to claim 1 or 2,
in which the means for supplying inert gas to the cathode gas circuit (11) and to the anode gas circuit (21) is a pressure reducer (53) in the inert gas flow path (51) and/or the means for supplying oxygen to the cathode gas circuit is a pressure reducer (33) in the oxygen flow path (31) and/or the means for supplying hydrogen to the anode gas circuit (21) is a pressure re - ducer (43) in the hydrogen flow path (41).

**4.** The fuel cell system (1) according to any of claims 1 to 3,
further comprising at least one container (60) for storing liquid water, the container (69) being in fluid connection with the means (16) for separating li - quid water and/or with the means (26) for separating liquid water, preferably via a water pump (61).

**5.** The fuel cell system (1) according to any of claims 1 to 4,
further comprising a means (5) for discharging gas from the cathode exhaust gas flow path (14) and/or a means (7) for discharging gas from the anode exhaust gas flow path (24).

**6.** The fuel cell system (1) according to any of claims 1 to 5,
further comprising a means for generating a vacuum in the cathode gas cir - cuit (11) and/or a means for generating a vacuum in the anode gas circuit (21).

**7.** A fuel cell system (1) suitable for operation with air as a cathode operating gas and an anode operating gas containing hydrogen and nitrogen, com - prising

- a fuel cell arrangement (2) having at least one fuel cell (3), wherein the fuel cell comprises a cathode (10) having a cathode flow region (13) and an anode (20) having an anode flow region (23),
- an air source (30’), a hydrogen source (40) and a nitrogen source (50),
- a cathode gas flow path (11’) comprising a cathode operating gas flow path (12) for feeding the cathode operating gas into the cathode flow re - gion (13) of the cathode (10), the cathode flow region (13), and a cath - ode exhaust gas flow path (14) for receiving cathode exhaust gas from the cathode flow region,
- an anode gas circuit (21) comprising an anode operating gas flow path (22) for feeding the anode operating gas into the anode flow region (23) of the anode (20), the anode flow region (23), an anode exhaust gas flow path (24) for receiving anode exhaust gas from the anode flow re - gion (23) and for recirculating the anode exhaust gas into the anode op - erating gas flow path (22), and a transition point (25) where the anode exhaust gas flow path (24) transitions into the anode operating gas flow path (22),
- a means (16) for separating liquid water from the anode exhaust gas in the anode exhaust gas flow path (24),
- a means (27) for generating a flow in the anode gas circuit (21), wherein the means (27) is preferably a pump or a jet nozzle,
- a pressure sensor (18) in the cathode gas flow path (11’), a pressure sensor (28) in the anode gas circuit (21), a temperature sensor (19) in the cathode gas flow path (11’) and optionally a temperature sensor (29) in the anode gas circuit (21) for determining an actual amount of a gas in the cathode gas flow path (11’) and for determining an actual amount of a gas in the anode gas circuit (21),
- a nitrogen flow path (51, 54) leading from the nitrogen source (50) to the transition point (25) in the anode gas

circuit (21) or to a point upstream of the transition point (25),
- a hydrogen flow path (41) leading from the hydrogen source (40) to the transition point (25) in the anode gas circuit (21),
- a means for supplying nitrogen to the anode gas circuit (21) until a nom - inal amount of nitrogen is reached in the anode gas circuit (21),
- a means for supplying hydrogen to the anode gas circuit (21) until a nominal amount of hydrogen is reached in the anode gas circuit (21), and
- a valve (5') in the cathode exhaust gas flow path (14),
- wherein there is no possibility in the fuel cell system (1) during operation of the at least one fuel cell (3) of taking in anode operating gas from the environment or of releasing anode operating gas into the environment or of storing the same, except for storing water in liquid form.

**8.** An appliance system, such as a manned or unmanned submarine vehicle, comprising a fuel cell system (1) according to any of claims 1 to 7.

**9.** A method for operating a fuel cell system (1) with a cathode operating gas containing oxygen and inert gas and an anode operating gas containing hy - drogen and inert gas, the fuel cell system (1) comprising

- a fuel cell arrangement (2) having at least one fuel cell (3), wherein the fuel cell comprises a cathode (10) having a cathode flow region (13) and an anode (20) having an anode flow region (23),
- a cathode gas circuit (11) comprising a cathode operating gas flow path (12), the cathode flow region (13), a cathode exhaust gas flow path (14), and a transition point (15) where the cathode exhaust gas flow path (14) transitions into the cathode operating gas flow path (12), and
- an anode gas circuit (21) comprising an anode operating gas flow path (22), the anode flow region (23), the anode exhaust gas flow path (24), and a transition point (25) where the anode exhaust gas flow path (24) transitions into the anode operating gas flow path (22),

wherein the method comprises the following steps:

- feeding a cathode operating gas containing oxygen and inert gas into the cathode flow region (13) of the fuel cell (3) and feeding an anode op - erating gas containing hydrogen and inert gas into the anode flow region (23) of the fuel cell (3), wherein the oxygen concentration in the cathode operating gas has a predetermined nominal value and the hydrogen concentration in the anode operating gas has a predetermined nominal value and wherein the inert gas partial pressure in the anode operating gas is equal to the inert gas partial pressure in the cathode operating gas,
- having oxygen and hydrogen react in the fuel cell, thereby generating electrical energy, a cathode exhaust gas containing inert gas and water and an anode exhaust gas containing inert gas and water,
- separating liquid water from the cathode exhaust gas and from the an - ode exhaust gas, thereby generating a cathode exhaust gas free of li - quid water and an anode exhaust gas free of liquid water,
- feeding the entire cathode exhaust gas free of liquid water into the cath - ode operating gas flow path (12) and feeding the entire anode exhaust gas free of liquid water into the anode operating gas flow path (22),
- determining an actual value of the oxygen concentration of the gas in the cathode operating gas flow path (12) and determining an actual value of the hydrogen concentration of the gas in the anode operating gas flow path (22),
- feeding oxygen into the cathode operating gas flow path (12) until the predetermined nominal value of the oxygen concentration of the cathode operating gas is reached, and feeding hydrogen into the anode operat - ing gas flow path (22) until the predetermined nominal value of the hy - drogen concentration of the anode operating gas is reached, and
- maintaining a gas flow rate in the cathode gas circuit (11) and the anode gas circuit (21),
- and wherein during operation of the at least one fuel cell (3) there is no matter taken in from the environment or released into the environment and there is no fuel cell exhaust gas stored, except for storing water in li - quid form.

**10.** The method according to claim 9, in which, before taking the fuel cell arrangement (2) into operation, the following steps are performed:

- filling the cathode gas circuit (11) and the anode gas circuit (21) by evac - uation and/or feeding in inert gas, each substantially simultaneously, with such an amount of inert gas that when feeding oxygen into the cathode

operating gas flow path (12) under the operating conditions of the fuel cell system (1), a cathode operating gas with the predetermined nominal value of the oxygen concentration is formed, and when feeding hydrogen into the anode operating gas flow path (22) under the operat - ing conditions of the fuel cell system (1), an anode operating gas with the predetermined nominal value of the hydrogen concentration is formed,
- setting the operating conditions of the fuel cell system (1),
- feeding oxygen into the cathode operating gas flow path (12) until the predetermined nominal value of the oxygen concentration of the cathode operating gas is reached, and substantially simultaneously
- feeding hydrogen into the anode operating gas flow path (22) until the predetermined nominal value of the hydrogen concentration of the an - ode operating gas is reached.

**11.** The method according to claim 9 or 10,
in which the oxygen concentration in the cathode operating gas flow path (12) and the hydrogen concentration in the anode operating gas flow path (22) are determined regularly or continuously.

**12.** The method according to any of claims 9 to 11,
in which nitrogen is used as inert gas.

**13.** A method for operating a fuel cell system (1) with air as a cathode operating gas and an anode operating gas containing hydrogen and nitrogen, wherein the fuel cell system (1) comprises

- a fuel cell arrangement (2) having at least one fuel cell (3), wherein the fuel cell comprises a cathode (10) having a cathode flow region (13) and an anode (20) having an anode flow region (23),
- a cathode gas flow path (11') comprising a cathode operating gas flow path (12), the cathode flow region (13) and a cathode exhaust gas flow path (14), and
- an anode gas circuit (21) comprising an anode operating gas flow path (22), the anode flow region (23), an anode exhaust gas flow path (24), and a transition point (25) where the anode exhaust gas flow path (24) transitions into the anode operating gas flow path (22),

the method comprising the following steps:

- feeding air as cathode operating gas into the cathode flow region (13) of the fuel cell (3), wherein the air has an oxygen concentration, and feed - ing an anode operating gas containing hydrogen and nitrogen into the anode flow region (23) of the fuel cell (3), wherein the hydrogen concen - tration in the anode operating gas has a predetermined nominal value corresponding to the oxygen concentration in the air and wherein the ni - trogen partial pressure in the anode operating gas is equal to the nitro - gen partial pressure in the cathode operating gas,
- having oxygen and hydrogen react in the fuel cell, thereby generating electrical energy, a cathode exhaust gas containing nitrogen and water and an anode exhaust gas containing nitrogen and water,
- separating liquid water from the anode exhaust gas, thereby generating an anode exhaust gas free of liquid water,
- feeding the entire anode exhaust gas free of liquid water into the anode operating gas flow path (22),
- determining an actual value of the hydrogen concentration of the gas in the anode operating gas flow path (22),
- optionally determining the oxygen concentrations of the air in the cath - ode operating gas flow path (12),
- feeding hydrogen into the anode operating gas flow path (22) until the predetermined nominal value of the hydrogen concentration of the an - ode operating gas is reached,
- maintaining a gas flow rate in the anode gas circuit (21) and the cathode gas flow path (11'), and
- discharging the cathode exhaust gas from the cathode exhaust gas flow path (14), and
- wherein during operation of the at least one fuel cell (3) there is no an - ode operating gas taken in from the environment and no anode operat - ing gas released into the environment or stored in the fuel cell system (1), except for storing water in liquid form.

**14.** The method according to claim 13, in which, before taking the fuel cell arrangement (2) into operation, the following steps are performed:

- feeding air into the cathode gas flow path (11') and substantially simul - taneously filling the anode gas circuit (21) by evacuation and/or feeding in nitrogen, with such an amount of nitrogen that when feeding hydrogen into the anode operating gas flow path (22) under the operating condi - tions of the fuel cell system (1), an anode operating gas with the prede - termined nominal value of the hydrogen concentration is generated, said nominal

value corresponding to the oxygen concentration in the air,
- setting the operating conditions of the fuel cell system (1), and
- feeding hydrogen into the anode operating gas flow path (22) until the predetermined nominal value of the hydrogen concentration of the an - ode operating gas is reached.

**15.** The method according to claim 13 or 14,
in which the hydrogen concentration in the anode operating gas flow path (22) and, optionally, the oxygen concentration in the cathode operating gas flow path (12) are determined regularly or continuously.

**Revendications**

**1.** Système de piles à combustible (1) qui est approprié pour son exploitation avec un gaz d'exploitation à la cathode qui Scontient de l'oxygène et un gaz inerte et avec un gaz d'exploitation à l'anode qui contient de l'hydrogène et un gaz inerte, présentant :

- un agencement de piles à combustible (2) comprenant au moins une pile à combustible (3) ; dans lequel la pile à combustible présente une cathode (10) comprenant une zone d'écoulement à la cathode (13) et une anode (20) comprenant une zone d'écoulement à l'anode (23) ;
- une source d'oxygène (30), une source d'hydrogène (40) et une source de gaz inerte (50) ;
- un circuit de gaz (11) à la cathode qui comprend une voie d'écoulement pour un gaz d'exploitation à la cathode (12) destinée à l'alimentation du gaz d'exploitation à la cathode dans la zone d'écoulement à la cathode (13) de la cathode (10), la zone d'écoulement à la cathode (13), une voie d'écoulement pour un effluent de gaz à la cathode (14) destinée à la réception de l'effluent de gaz à la cathode à partir de la zone d'écoulement à la cathode et destinée à la remise en circulation de l'effluent de gaz à la cathode dans la voie d'écoulement pour un gaz d'exploitation à la cathode (12), et un endroit de transition (15) auquel la voie d'écoulement pour un effluent de gaz à la cathode (14) se transforme pour obtenir la voie d'écoulement pour un gaz d'exploitation à la cathode (12) ;
- un circuit de gaz (21) à l'anode qui comprend une voie d'écoulement pour un gaz d'exploitation à l'anode (22) destinée à l'alimentation du gaz d'exploitation à l'anode dans la zone d'écoulement à l'anode (23) de l'anode (20), la zone d'écoulement à l'anode (23), une voie d'écoulement pour un effluent de gaz à l'anode (24) destinée à la réception de l'effluent de gaz à l'anode à partir de la zone d'écoulement à l'anode et destinée à la remise en circulation de l'effluent de gaz à l'anode dans la voie d'écoulement pour un gaz d'exploitation à l'anode (22), et un endroit de transition (25) auquel la voie d'écoulement pour un effluent de gaz à l'anode (24) se transforme pour obtenir la voie d'écoulement pour un gaz d'exploitation à l'anode (22) ;
- un mécanisme (16) destiné à la séparation de l'eau liquide à partir de l'effluent de gaz à la cathode dans la voie d'écoulement pour un gaz à la cathode (14) et un mécanisme (26) destiné à la séparation de l'eau liquide à partir de l'effluent de gaz à l'anode dans la voie d'écoulement pour un effluent de gaz à l'anode (24) ;
- un mécanisme (17) destiné à la génération d'un écoulement dans le circuit de gaz (11) à la cathode et un mécanisme (27) destiné à la génération d'un écoulement dans le circuit de gaz (21) à l'anode ; dans lequel le mécanisme (17) et/ou le mécanisme (27) représente(nt) de préférence une pompe au une buse d'éjection ;
- un capteur de la pression (18) dans le circuit de gaz (11) à la cathode, un capteur de la pression (28) dans le circuit de gaz (21) à l'anode, un capteur de la température (19) dans le circuit de gaz (11) à la cathode et de manière facultative un capteur de la température (29) dans le circuit de gaz (21) à l'anode pour la détermination d'une quantité réelle d'un gaz dans le circuit de gaz (11) à la cathode et pour la détermination d'une quantité réelle d'un gaz dans le circuit de gaz (21) à l'anode ;
- une voie d'écoulement pour un gaz inerte (51, 52) à partir de la source de gaz inerte (50) jusqu'à l'endroit de transition (15) dans le circuit de gaz (11) à la cathode ou jusqu'à un endroit situé en amont par rapport à l'endroit de transition (15), et une voie d'écoulement pour un gaz inerte (51, 54) à partir de la source de gaz inerte (50) jusqu'à l'endroit de transition (25) dans le circuit de gaz (21) à l'anode ou jusqu'à un endroit situé en amont par rapport à l'endroit de transition (25) ;
- une voie d'écoulement pour de l'oxygène (31) à partir de la source d'oxygène (30) jusqu'à l'endroit de transition (15) dans le circuit de gaz (11) à la cathode et une voie d'écoulement pour de l'hydrogène (41) à partir de la source d'hydrogène (40) jusqu'à l'endroit de transition (25) dans le circuit de gaz (21) à l'anode ;
- un mécanisme destiné à l'acheminement d'un gaz inerte au circuit de gaz (11) à la cathode et au circuit de gaz (21) à l'anode jusqu'à ce que l'on atteigne une quantité de consigne en ce qui concerne le gaz inerte dans le circuit de gaz (11) à la cathode et dans le circuit de gaz (21) à l'anode ;
- un mécanisme destiné à l'acheminement d'oxygène au circuit de gaz (11) à la cathode jusqu'à ce que l'on

atteigne une quantité de consigne en ce qui concerne l'oxygène dans le circuit de gaz (11) à la cathode ; et
- un circuit destiné à l'acheminement d'hydrogène au circuit de gaz (21) à l'anode jusqu'à ce que l'on atteigne une quantité de consigne en ce qui concerne l'hydrogène dans le circuit de gaz (21) à l'anode ;
- dans lequel, dans le système de piles à combustible (1), aucune possibilité n'existe, au cours de l'exploitation de ladite au moins une pile à combustible (3), de recevoir de la matière à partir de l'environnement ou d'en évacuer dans ledit environnement ou de stocker un effluent de gaz de pile à combustible, en dehors du stockage d'eau sous forme liquide.

**2.** Système de piles à combustible (1) selon la revendication 1, présentant en outre un mécanisme destiné à l'alimentation, soit d'oxygène à partir de la voie d'écoulement pour de l'oxygène (31), soit d'un gaz inerte à partir de la voie d'écoulement pour un gaz inerte (51, 52) jusque dans le circuit de gaz (11) à la cathode à l'endroit de transition (15) du circuit de gaz (11) à la cathode et/ou un mécanisme destiné à l'alimentation, soit d'hydrogène à partir de la voie d'écoulement pour de l'hydrogène (41), soit d'un gaz inerte à partir de la voie d'écoulement pour un gaz inerte (51, 54) jusque dans le circuit de gaz (21) à l'anode à l'endroit de transition (25) du circuit de gaz (21) à l'anode.

**3.** Système de piles à combustible (1) selon la revendication 1 ou 2, dans lequel le mécanisme destiné à l'alimentation d'un gaz inerte au circuit de gaz (11) à la cathode et au circuit de gaz (21) à l'anode représente un réducteur de la pression (53) dans la voie d'écoulement pour un gaz inerte (51) et/ou le mécanisme destiné à l'alimentation d'oxygène au circuit de gaz à la cathode représente un réducteur de la pression (33) dans la voie d'écoulement pour de l'oxygène (31) et/ou le mécanisme pour l'alimentation d'hydrogène au circuit de gaz (21) à l'anode représente un réducteur de la pression (43) dans la voie d'écoulement pour de l'hydrogène (41).

**4.** Système de piles à combustible (1) selon l'une quelconque des revendications 1 à 3, présentant en outre un récipient (60) destiné à accumuler de l'eau liquide, qui est mis en liaison par fluide avec le mécanisme (16) destiné à la séparation de l'eau liquide et/ou avec le mécanisme (26) destiné à la séparation de l'eau liquide, de préférence par l'intermédiaire d'une pompe à eau (61).

**5.** Système de piles à combustible (1) selon l'une quelconque des revendications 1 à 4, présentant en outre un mécanisme (5) destiné à l'expulsion de gaz à partir de la voie d'écoulement pour un effluent de gaz à la cathode (14) et/ou un mécanisme (7) pour l'expulsion de gaz à partir de la voie d'écoulement pour un effluent de gaz à l'anode (24).

**6.** Système de piles à combustible (1) selon l'une quelconque des revendications 1 à 5, présentant en outre un mécanisme destiné à la génération d'une dépression dans le circuit de gaz (11) à la cathode et/ou un mécanisme destiné à la génération d'une dépression dans le circuit de gaz (21) à l'anode.

**7.** Système de piles à combustible (1), qui est approprié pour son exploitation avec de l'air à titre de gaz d'exploitation à la cathode et avec un gaz d'exploitation à l'anode qui contient de l'hydrogène et de l'azote, présentant :

- un agencement de piles à combustible (2) comprenant au moins une pile à combustible (3); dans lequel la pile à combustible présente une cathode (10) comprenant une zone d'écoulement à la cathode (13) et une anode (20) comprenant une zone d'écoulement à l'anode (23) ;
- une source d'air (30'), une source d'hydrogène (40) et une source d'azote (50) ;
- une voie d'écoulement pour un gaz à la cathode (11') qui comprend une voie d'écoulement pour un gaz d'exploitation à la cathode (12) destinée à l'alimentation du gaz d'exploitation à la cathode dans la zone d'écoulement à la cathode (13) de la cathode (10), la zone d'écoulement à la cathode (13) et une voie d'écoulement pour un effluent de gaz à la cathode (14) destinée à la réception d'un effluent de gaz à la cathode à partir de la zone d'écoulement à la cathode ;
- un circuit de gaz (21) à l'anode qui comprend une voie d'écoulement pour un gaz d'exploitation à l'anode (22) destinée à l'alimentation du gaz d'exploitation à l'anode dans la zone d'écoulement à l'anode (23) de l'anode (20), la zone d'écoulement à l'anode (23), une voie d'écoulement pour un effluent de gaz à l'anode (24) destinée à la réception d'un effluent de gaz à l'anode à partir de la zone d'écoulement à l'anode (23) et destiné à la remise en circulation de l'effluent de gaz à l'anode dans la voie d'écoulement pour un gaz d'exploitation à l'anode (22), et un endroit de transition (25) auquel la voie d'écoulement pour un effluent de gaz à l'anode (24) se transforme pour obtenir la voie d'écoulement pour un gaz d'exploitation à l'anode (22) ;
- un mécanisme (26) destiné à la séparation d'eau liquide à partir de l'effluent de gaz à l'anode dans la voie d'écoulement pour un effluent de gaz à l'anode (24) ;
- un mécanisme (27) destiné à la génération d'un écoulement dans le circuit de gaz (21) à l'anode ; dans lequel

le mécanisme (27) représente de préférence une pompe ou une buse d'injection ;

- un capteur de la pression (18) dans la voie d'écoulement pour un gaz à la cathode (11'), un capteur de la pression (28) dans le circuit de gaz (21) à l'anode, un capteur de la température (19) dans la voie d'écoulement pour un gaz à la cathode (11') et, de manière facultative, un capteur de la température (29) dans le circuit de gaz (21) à l'anode pour la détermination d'une quantité réelle d'un gaz dans la voie d'écoulement pour un gaz à la cathode (11') et pour la détermination d'une quantité réelle d'un gaz dans le circuit de gaz (21) à l'anode ;
- une voie d'écoulement pour de l'azote (51, 54) à partir de la source d'azote (50) jusqu'à l'endroit de transition (25) dans le circuit de gaz (21) à l'anode ou jusqu'à un endroit situé en amont par rapport à l'endroit de transition (25) ;
- une voie d'écoulement pour de l'hydrogène (41) à partir de la source d'hydrogène (40) jusqu'à l'endroit de transition (25) dans le circuit de gaz (21) à l'anode ;
- un mécanisme destiné à l'acheminement d'azote au circuit de gaz (21) à l'anode jusqu'à ce que l'on atteigne une quantité de consigne en ce qui concerne l'azote dans le circuit de gaz (21) à l'anode ;
- un mécanisme destiné à l'acheminement d'hydrogène au circuit de gaz (21) à l'anode jusqu'à ce que l'on atteigne une quantité de consigne en ce qui concerne l'hydrogène dans le circuit de gaz (21) à l'anode ; et
- une soupape (5') dans la voie d'écoulement pour un effluent de gaz à la cathode (14) ;
- dans lequel, dans le système de piles à combustible (1), aucune possibilité n'existe, au cours de l'exploitation de ladite au moins une pile à combustible (3) de recevoir à partir de l'environnement un gaz d'exploitation à l'anode ou d'évacuer un effluent de gaz à l'anode dans ledit environnement ou de le stocker, en dehors du stockage d'eau sous forme liquide.

**8.** Système d'utilisation, tel qu'un véhicule sous-marin habité ou sans pilote, qui présente un système de piles à combustible (1) selon l'une quelconque des revendications 1 à 7.

**9.** Procédé pour l'exploitation d'un système de piles à combustible (1) avec un gaz d'exploitation à la cathode qui contient de l'oxygène et un gaz inerte et un gaz d'exploitation à l'anode qui contient de l'hydrogène et un gaz inerte, présentant :

- un agencement de piles à combustible (2) comprenant au moins une pile à combustible (3) ; dans lequel la pile à combustible présente une cathode (10) comprenant une zone d'écoulement à la cathode (13) et une anode (20) comprenant une zone d'écoulement à l'anode (23) ;
- un circuit de gaz (11) à la cathode qui comprend une voie d'écoulement pour un gaz d'exploitation à la cathode (12), la zone d'écoulement à la cathode (13), une voie d'écoulement pour un effluent de gaz à la cathode (14), et un endroit de transition (15) auquel la voie d'écoulement pour un effluent de gaz à la cathode (14) se transforme pour obtenir la voie d'écoulement pour un gaz d'exploitation à la cathode (12) ; et
- un circuit de gaz (21) à l'anode qui comprend une voie d'écoulement pour un gaz d'exploitation à l'anode (22), la zone d'écoulement à l'anode (23), une voie d'écoulement pour un effluent de gaz à l'anode (24), et un endroit de transition (25) auquel la voie d'écoulement pour un effluent de gaz à l'anode (24) se transforme pour obtenir la voie d'écoulement pour un gaz d'exploitation à l'anode (22) ;

dans lequel le procédé présente les étapes suivantes dans lesquelles :

- on introduit un gaz d'exploitation à la cathode qui contient de l'oxygène et un gaz inerte dans la zone d'écoulement à la cathode (13) de la pile à combustible (3) et on introduit un gaz d'exploitation à l'anode qui contient de l'hydrogène et un gaz inerte dans la zone d'écoulement à l'anode (23) de la pile à combustible (3) ; dans lequel la concentration d'oxygène dans le gaz d'exploitation à la cathode présente une valeur de consigne qui a été prédéfinie et la concentration d'hydrogène dans le gaz exploitation à l'anode présente une valeur de consigne qui a été prédéfinie ; et dans lequel la pression partielle du gaz inerte dans le gaz d'exploitation à l'anode est égale à la pression partielle du gaz inerte dans le gaz d'exploitation à la cathode ;
- on fait réagir l'oxygène et l'hydrogène dans la pile à combustible ce qui permet d'obtenir de l'énergie électrique, un effluent de gaz à la cathode qui contient un gaz inerte et de l'eau et un effluent de gaz à l'anode qui contient un gaz inerte et de l'eau ;
- on sépare l'eau liquide de l'effluent de gaz à la cathode et de l'effluent de gaz à l'anode pour générer un effluent de gaz à la cathode qui est exempt d'eau liquide et un effluent de gaz à l'anode qui est exempt d'eau liquide ;
- on introduit la totalité de l'effluent de gaz à la cathode qui est exempt d'eau liquide dans la voie d'écoulement pour le gaz d'exploitation à la cathode (12) et on introduit la totalité de l'effluent de gaz à l'anode qui est exempt d'eau liquide dans la voie d'écoulement pour le gaz d'exploitation à l'anode (22) ;

- on détermine une valeur réelle de la concentration d'oxygène du gaz dans la voie d'écoulement pour le gaz d'exploitation à la cathode (12) et on détermine une valeur réelle de la concentration d'hydrogène du gaz dans la voie d'écoulement pour le gaz d'exploitation à l'anode (22) ;
- on introduit de l'oxygène dans la voie d'écoulement pour le gaz d'exploitation à la cathode (12) jusqu'à ce que l'on atteigne la valeur de consigne qui a été prédéfinie en ce qui concerne la concentration d'oxygène du gaz d'exploitation à la cathode et on introduit de l'hydrogène dans la voie d'écoulement des gaz d'exploitation à l'anode (22) jusqu'à ce que l'on atteigne la valeur de consigne qui a été prédéfinie en ce qui concerne la concentration d'hydrogène du gaz d'exploitation à l'anode ; et
- on maintient une vitesse d'écoulement pour le gaz dans le circuit de gaz (11) à la cathode et dans le circuit de gaz (21) à l'anode ;

310et dans lequel, au cours de l'exploitation de ladite au moins une pile à combustible (3), on ne reçoit aucune matière à partir de l'environnement ou on évacue aucune matière dans ledit environnement et on ne stocke aucun effluent de gaz de pile à combustible, en dehors du stockage d'eau sous forme liquide.

**10.** Procédé selon la revendication 9, dans lequel, avant la mise en exploitation de l'agencement de piles à combustible (2), on met en œuvre les étapes suivantes dans lesquelles :

- on remplit le circuit de gaz (11) à la cathode et le circuit de gaz (21) à l'anode en faisant le vide et/ou en introduisant un gaz inerte, essentiellement de manière simultanée à chaque reprise avec une quantité de gaz inerte telle que, lors de l'introduction d'oxygène dans la voie d'écoulement pour le gaz exploitation à la cathode (12), dans les conditions d'exploitation du système de piles à combustible (1), on obtient un gaz d'exploitation à la cathode qui possède la valeur de consigne qui a été prédéfinie en ce qui concerne la concentration d'oxygène, et lors de l'introduction d'hydrogène dans la voie d'écoulement pour le gaz d'exploitation à l'anode (22), dans les conditions d'exploitation du système de piles à combustible (1), on obtient un gaz d'exploitation à l'anode qui possède la valeur de consigne qui a été prédéfinie en ce qui concerne la concentration d'hydrogène ;
- on règle les conditions d'exploitation du système de piles à combustible (1) ;
- on introduit de l'oxygène dans la voie d'écoulement pour le gaz d'exploitation à la cathode (12) jusqu'à ce que l'on atteigne la valeur de consigne qui a été prédéfinie en ce qui concerne la concentration d'oxygène du gaz d'exploitation à la cathode et, essentiellement de manière simultanée,
- on introduit de l'hydrogène dans la voie d'écoulement pour le gaz d'exploitation à l'anode (22) jusqu'à ce que l'on atteigne la valeur de consigne qui a été prédéfinie en ce qui concerne la concentration d'hydrogène du gaz d'exploitation à l'anode.

**11.** Procédé selon la revendication 9 ou 10, dans lequel on détermine de manière régulière ou de manière continue la concentration d'oxygène dans la voie d'écoulement pour le gaz exploitation à la cathode (12) et la concentration d'hydrogène dans la voie d'écoulement pour le gaz d'exploitation à l'anode (22).

**12.** Procédé selon l'une quelconque des revendications 9 à 11, dans lequel on utilise de l'azote à titre de gaz inerte.

**13.** Procédé destiné à l'exploitation d'un système de piles à combustible (1) avec de l'air à titre de gaz d'exploitation à la cathode et avec un gaz d'exploitation à l'anode qui contient de l'hydrogène et de l'azote, dans lequel le système de piles à combustible (1) présente :

- un agencement de piles à combustible (2) comprenant au moins une pile à combustible (3) ; dans lequel la pile à combustible présente une cathode (10) comprenant une zone d'écoulement à la cathode (13) et une anode (20) comprenant une zone d'écoulement à l'anode (23) ;
- une voie d'écoulement pour un gaz à la cathode (11') qui comprend une voie d'écoulement pour un gaz d'exploitation à la cathode (12), la zone d'écoulement à la cathode (13) et une voie d'écoulement pour un effluent de gaz à la cathode (14) ; et
- un circuit de gaz (21) à l'anode qui comprend une voie d'écoulement pour un gaz d'exploitation à l'anode (22), la zone d'écoulement à l'anode (23), une voie d'écoulement pour un effluent de gaz à l'anode (24) et un endroit de transition (25) auquel la voie d'écoulement pour un effluent de gaz à l'anode (24) se transforme pour obtenir la voie d'écoulement pour un gaz d'exploitation à l'anode (22) ;

dans lequel le procédé présente les étapes suivantes dans lesquelles :

- on introduit de l'air à titre de gaz d'exploitation à la cathode dans la zone d'écoulement à la cathode (13) de

la pile à combustible (3), dans lequel l'air présente une concentration d'oxygène, et on introduit un gaz d'exploitation à l'anode qui contient de l'hydrogène et de l'azote dans la zone d'écoulement à l'anode (23) de la pile à combustible (3) ; dans lequel la concentration d'hydrogène dans le gaz d'exploitation à l'anode présente une valeur de consigne qui a été prédéfinie, qui correspond à la concentration d'oxygène dans l'air ; et dans lequel la pression partielle d'azote dans le gaz d'exploitation à l'anode est égale à la pression partielle d'azote dans le gaz d'exploitation à la cathode ;
- on fait réagir l'oxygène et hydrogène dans la pile à combustible, ce qui permet d'obtenir une énergie électrique, un effluent de gaz à la cathode qui contient de l'azote et de l'eau et un effluent de gaz à l'anode qui contient de l'azote et de l'eau ;
- on sépare l'eau liquide à partir de l'effluent de gaz à l'anode pour ainsi obtenir un effluent de gaz à l'anode qui est exempt d'eau liquide ;
- on introduit la totalité de l'effluent de gaz à l'anode qui est exempt d'eau liquide dans la voie d'écoulement pour le gaz d'exploitation à l'anode (22) ;
- on détermine une valeur réelle de la concentration d'hydrogène du gaz dans la voie d'écoulement pour le gaz exploitation à l'anode (22) ;
- on détermine de manière facultative la concentration d'oxygène de l'air dans la voie d'écoulement pour le gaz d'exploitation à la cathode (12) ;
- on introduit de l'hydrogène dans la voie d'écoulement pour le gaz d'exploitation à l'anode (22) jusqu'à ce que l'on atteigne la valeur de consigne qui a été prédéfinie en ce qui concerne la concentration de l'hydrogène du gaz d'exploitation à l'anode ;
- on maintient une vitesse d'écoulement des gaz dans le circuit de gaz à l'anode (21) et dans la voie d'écoulement pour le gaz à la cathode (11'); et
- on expulse l'effluent de gaz à la cathode à partir de la voie d'écoulement pour l'effluent de gaz à la cathode (14) ;
et dans lequel, au cours de l'exploitation de ladite au moins une pile à combustible (3), on ne reçoit aucune quantité de gaz d'exploitation à l'anode à partir de l'environnement et on évacue aucune quantité d'effluent de gaz à l'anode dans ledit environnement ou on ne le stocke dans le système de piles à combustible, en dehors du stockage d'eau sous forme liquide.

**14.** Procédé selon la revendication 13, dans lequel, avant la mise en exploitation de l'agencement de piles à combustible (2), on met en œuvre les étapes suivantes dans lesquelles :

- on introduit de l'air dans la voie d'écoulement pour le gaz à la cathode (11'), et essentiellement de manière simultanée on remplit le circuit de gaz à l'anode (21), en faisant le vide et/ou en introduisant de l'azote avec une quantité d'azote telle qu'au cours de l'introduction d'hydrogène dans la voie d'écoulement pour le gaz d'exploitation à l'anode (22), dans les conditions d'exploitation du système de piles à combustible (1), on obtient un gaz d'exploitation à l'anode qui possède la valeur de consigne qui a été prédéfinie en ce qui concerne la concentration d'hydrogène, qui correspond à la concentration d'oxygène dans l'air ;
on règle les conditions d'exploitation du système de piles à combustible (1) ; et
- on introduit de l'hydrogène dans la voie d'écoulement pour le gaz d'exploitation à l'anode (22) jusqu'à ce que l'on atteigne la valeur de consigne qui a été prédéfinie en ce qui concerne la concentration d'hydrogène du gaz d'exploitation à l'anode.

**15.** Procédé selon la revendication 13 ou 14, dans lequel on détermine de manière régulière ou de manière continue la concentration d'hydrogène dans la voie d'écoulement pour le gaz d'exploitation à l'anode (22) et de manière facultative la concentration d'oxygène dans la voie d'écoulement pour le gaz d'exploitation à la cathode (12).

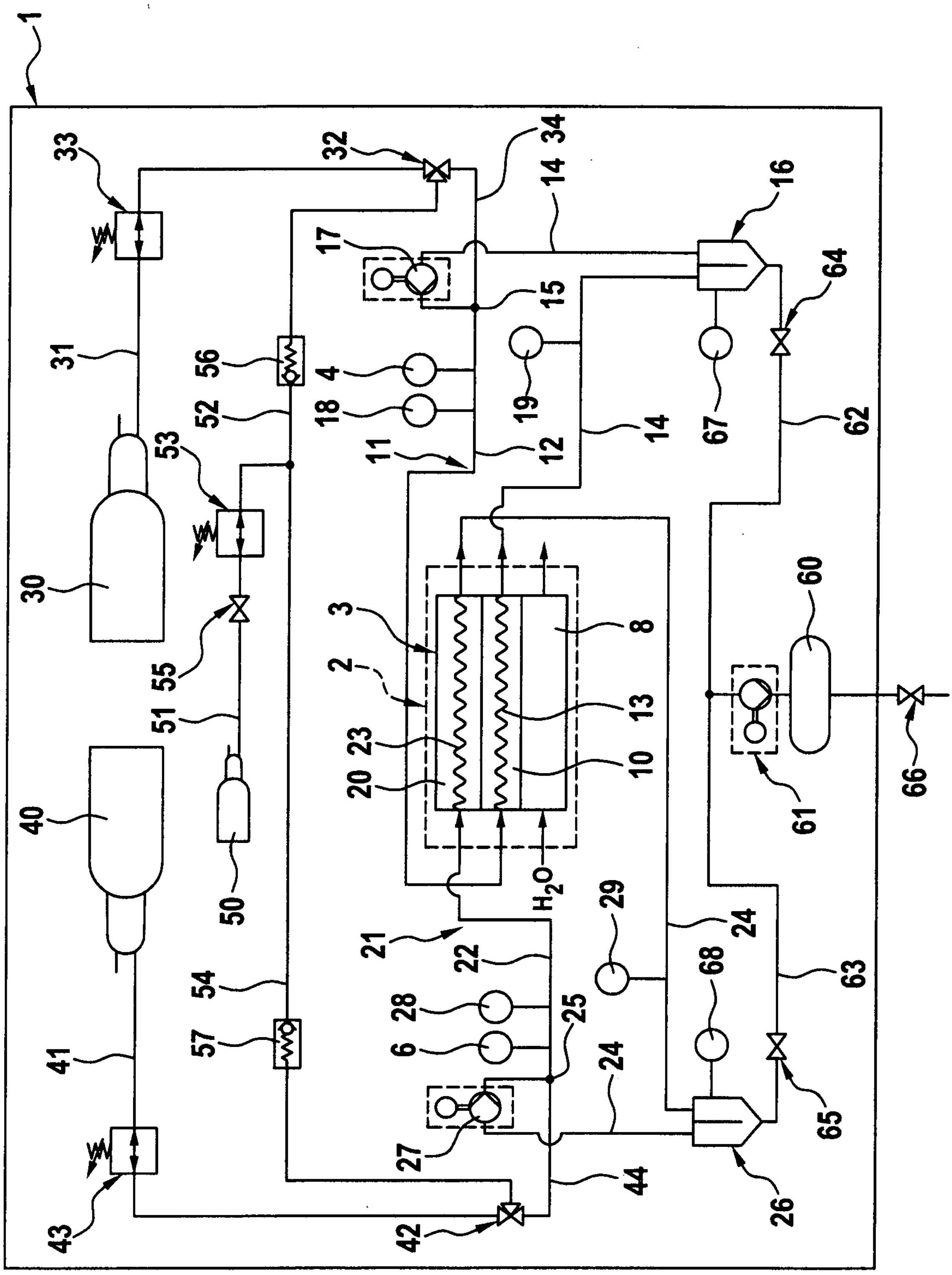
1
33
32
34
14
16
17
15
64
31
56
4
18
19
67
52
11
12
14
62
53
30
60
3
8
2
55
51
23
13
20
10
61
66
40
50
H2O
29
21
22
24
54
28
68
63
25
41
57
6
24
27
44
43
42
26
65

Fig. 1

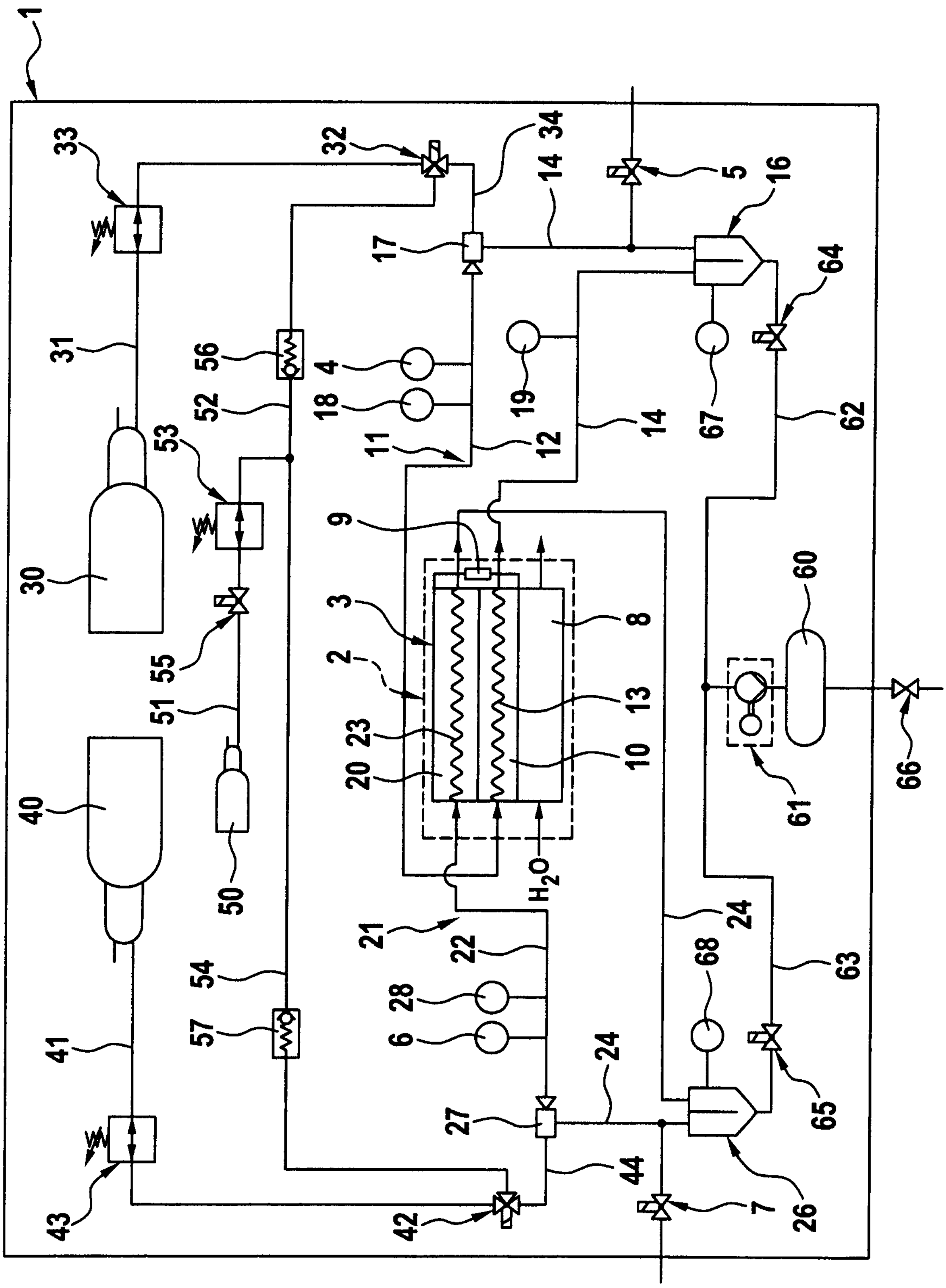
1
2
3
4
5
6
7
8
9
10
11
12
13
14
16
17
18
19
20
21
22
23
24
26
27
28
30
31
32
33
34
40
41
42
43
44
50
51
52
53
54
55
56
57
60
61
62
63
64
65
66
67
68
$H_2O$

Fig. 2

Fig. 3

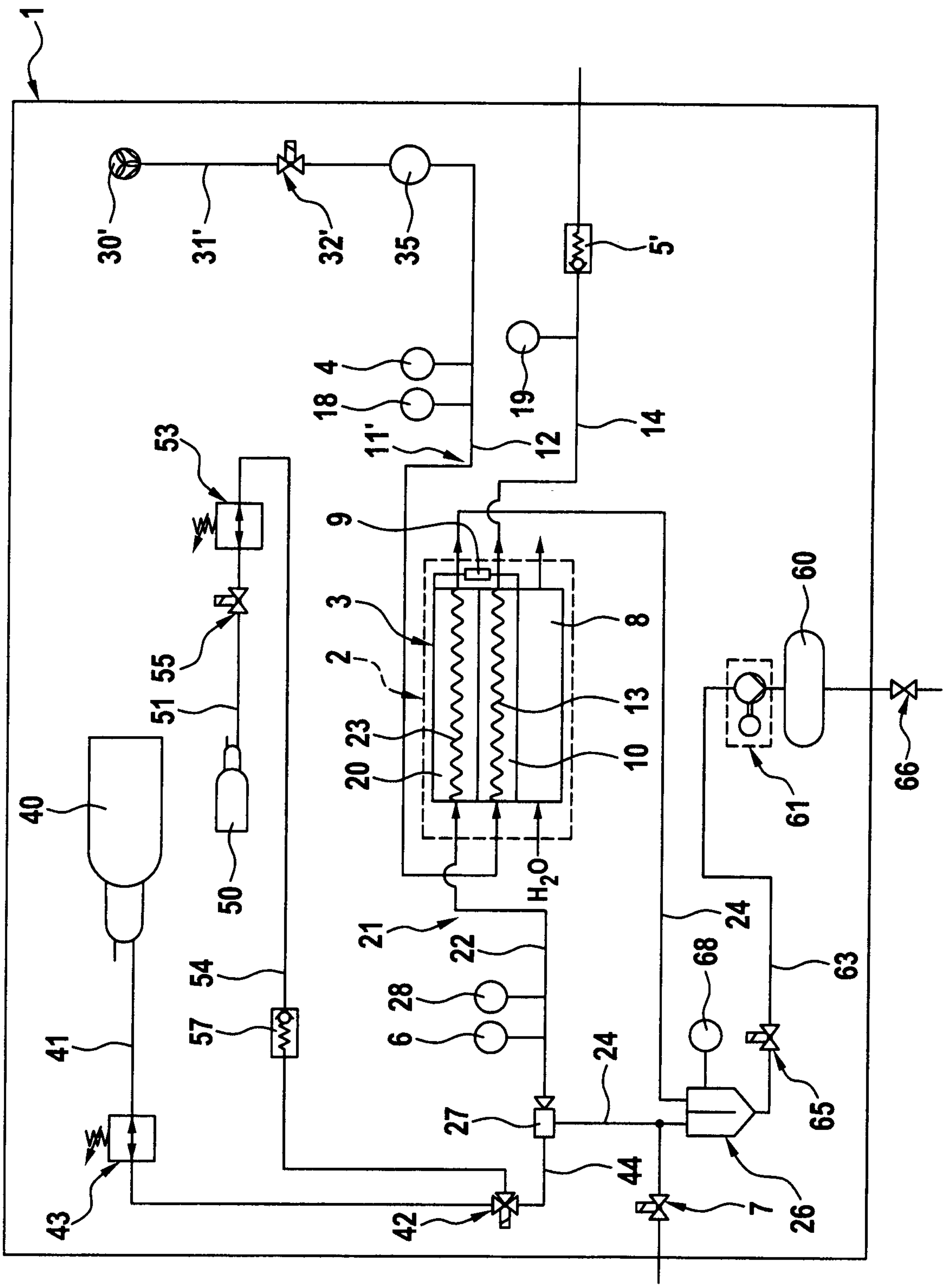
1
30'
31'
32'
35
5'
4
18
19
11'
12
14
53
9
3
8
2
55
51
23
20
13
10
60
40
50
H2O
61
66
21
22
24
54
28
68
63
57
6
41
24
27
44
65
43
42
7
26

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur


- VDI-Wärmeatlas. Springer-Verlag, 2006